# EUROPEAN PATENT APPLICATION

(11) **EP 3 760 391 A1**
(43) Date of publication of application: **06.01.2021**
(21) Application number: 20183139.3
(22) Date of filing: 30.06.2020
(51) Int. Cl.: B25J 9/16

(54) **INFORMATION PROCESSING APPARATUS, TELEPRESENCE ROBOT, INFORMATION PROCESSING METHOD, AND CARRIER MEANS**

(30) Priority: 03.07.2019 JP 2019124664; 22.06.2020 JP 2020107059
(71) Applicant: Ricoh Company, Ltd., Tokyo 143-8555 (JP)
(72) Inventor: OHTSUKA, Aiko, Tokyo, 143-8555 (JP); KAWAGUCHI, Atsuo, Tokyo, 143-8555 (JP)
(74) Representative: SSM Sandmair

(57) **Abstract**

An information processing apparatus (70, 30a) for controlling operation of a telepresence robot at a site includes a notification information receiving unit (71, 31a) configured to receive notification information including device position information of an operation device (20) at the site, the operation device (20) being configured to receive an operation performed by a user, an output unit (71, 31a) configured to output an operation start request for moving to a specific movement destination, to a specific telepresence robot (10) that is identified based on the device position information included in the received notification information and robot position information of the telepresence robot (10) at the site, a communication request transmitting unit (71, 31a) configured to transmit a communication request to an administrator terminal (50) configured to perform a remote communication with the specific telepresence robot (10), to instruct the specific telepresence robot (10) to move to the specific movement destination, and to start a remote communication between the administrator terminal (50) and the specific telepresence robot (10).

## Description

### BACKGROUND

### Technical Field

This disclosure relates to an information processing apparatus, a telepresence robot, a site control system, a remote control system, an information processing method, and carrier means.

### Background Art

Remote control systems for controlling telepresence robots disposed at remote sites from administrator terminals disposed at another locations via communication networks are known. As to the remote control systems, images captured by image capture devices provided for the telepresence robots can be displayed on the administrator terminals, with which the administrators can check information on the remote sites where the telepresence robots are disposed, from another locations.

For example, a technology, disclosed in JP-2018-121322-A, discloses a method of communicably connecting a communication terminal used by an administrator (e.g., communication control center) and a plurality of telepresence robots (e.g., communication targets) disposed at remote sites away from the administrator for connecting any telepresence robot and the administrator.

However, as to conventional methods, the remote communication between the administrator (e.g., communication control center) and the plurality of telepresence robots (e.g., communication targets) is started in response to a request from an administrator who operates the telepresence robots, in which the administrator cannot be called from users (e.g., workers) at the remote sites where the telepresence robots are disposed. Therefore, there is a room for improving the convenience in remote communication using the telepresence robot.

### SUMMARY

In one aspect of the present invention, information processing apparatus for controlling operation of a telepresence robot at a site is devised. The information processing apparatus includes a notification information receiving unit configured to receive notification information including device position information of an operation device at the site, the operation device being configured to receive an operation performed by a user, an output unit configured to output an operation start request for moving to a specific movement destination, to a specific telepresence robot that is identified based on the device position information included in the received notification information and robot position information of the telepresence robot at the site, a communication request transmitting unit configured to transmit a communication request to an administrator terminal configured to perform a remote communication with the specific telepresence robot, to instruct the specific telepresence robot to move to the specific movement destination, and to start a remote communication between the administrator terminal and the specific telepresence robot.

In another aspect of the present invention, a telepresence robot capable of starting to operate in response to receiving a request from an information processing apparatus is devised. The telepresence robot includes an acquisition unit configured to acquire an operation start request from the information processing apparatus, a movement control unit configured to start to move the telepresence robot to a specific destination indicated by the acquired operation start request, and a communication control unit configured to start a remote communication with an administrator terminal in response to receiving a request from the administrator terminal when the movement of the telepresence robot is started.

In another aspect of the present invention, a method of controlling an operation of a telepresence robot at a site is devised. The method includes receiving notification information including device position information of an operation device at the site, the operation device being configured to receive an operation performed by a user, outputting an operation start request for moving to a specific movement destination, to a specific telepresence robot that is identified based on the device position information included in the received notification information and robot position information of the telepresence robot at the site, transmitting a communication request to an administrator terminal configured to perform a remote communication with the specific telepresence robot, instructing the specific telepresence robot to move to the specific movement destination, and starting a remote communication between the administrator terminal and the specific telepresence robot.

According to the above described aspects of the present invention, the convenience in remote communication using a telepresence robot can be improved.

### BRIEF DESCRIPTION OF THE DRAWINGS

A more complete appreciation of the description and many of the attendant advantages and features thereof can be readily acquired and understood from the following detailed description with reference to the accompanying drawings, wherein:
FIG. 1 is an example of system configuration of a remote control system according to an embodiment;
FIG. 2 is an example scene using the remote control system according to the embodiment;
FIG. 3 is an example of configuration of a robot according to the embodiment;
FIG. 4 is an example of hardware block diagram of a robot according to the embodiment;
FIG. 5 is an example of hardware block diagram of an administrator terminal according to the embodiment;
FIG. 6 is an example of hardware block diagram of an information processing server according to the embodiment;
FIGs. 7A and 7B are is an example of functional block diagram of the remote control system according to the embodiment;
FIG. 8A is an example of user information management table;
FIG. 8B is an example of notification pattern management table;
FIGs. 9A and 9B are an example of functional block diagram of the remote control system according to the embodiment;
FIG. 10A is an example of site information management table;
FIG. 10B is an example of position information management table;
FIG. 10C is an example of condition information management table;
FIG. 11A is an example of state information management table;
FIG. 11B is an example of administrator information management table;
FIG. 11C is an example of calling history management table;
FIG. 12A is an example of authentication management table;
FIG. 12B is an example of terminal management table;
FIG. 13A is an example of destination list management table;
FIG. 13B is an example of session management table;
FIG. 14 is an example of a sequence diagram of calling processing from a site system in the remote control system according to the embodiment;
FIG. 15 is an example of flowchart of robot search processing using the information processing server according to the embodiment;
FIG. 16 is an example of flowchart of operation start processing for robot according to the embodiment;
FIG. 17 is an example of a sequence diagram of preparation processing for data transmission and reception between a robot and an administrator terminal;
FIG. 18 is an example of a destination list screen displayed on an administrator terminal;
FIG. 19 is an example of a sequence diagram of process of selecting a destination candidate and then starting transmission and reception of image data;
FIG. 20 is another example of flowchart of operation start processing for a robot according to the embodiment;
FIG. 21 is an example of flowchart of communication state notification processing for a robot according to the embodiment;
FIGs. 22A and 22B illustrate diagrams describing communication state of a robot according to the embodiment;
FIG. 23 illustrates a diagram describing communication state of a robot according to the embodiment;
FIG. 24 is an example of flowchart of cancellation processing of a communication request at an information processing server according to the embodiment;
FIG. 25 is an example of a sequence diagram of canceling a communication request in a remote control system according to the embodiment;
FIG. 26 is an example of a sequence diagram of processing when a remote communication between a robot and an administrator terminal is terminated;
FIG. 27 is an example of calling history information;
FIG. 28 is an example of flowchart of processing of a robot after terminating a remote communication according to the embodiment;
FIGs. 29A and 29B are an example of a functional block diagram of a remote control system according to a modification example of the embodiment; and
FIG. 30 is an example of sequence diagram of calling processing from a site system in the remote control system according to the modification example of the embodiment.

The accompanying drawings are intended to depict embodiments of the this disclosure and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

Further, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of one or more embodiments of this disclosure with reference to the drawings. Further, the same elements are denoted by the same reference numerals in the description of the drawings, and the duplicate description is omitted.

### (System Configuration)

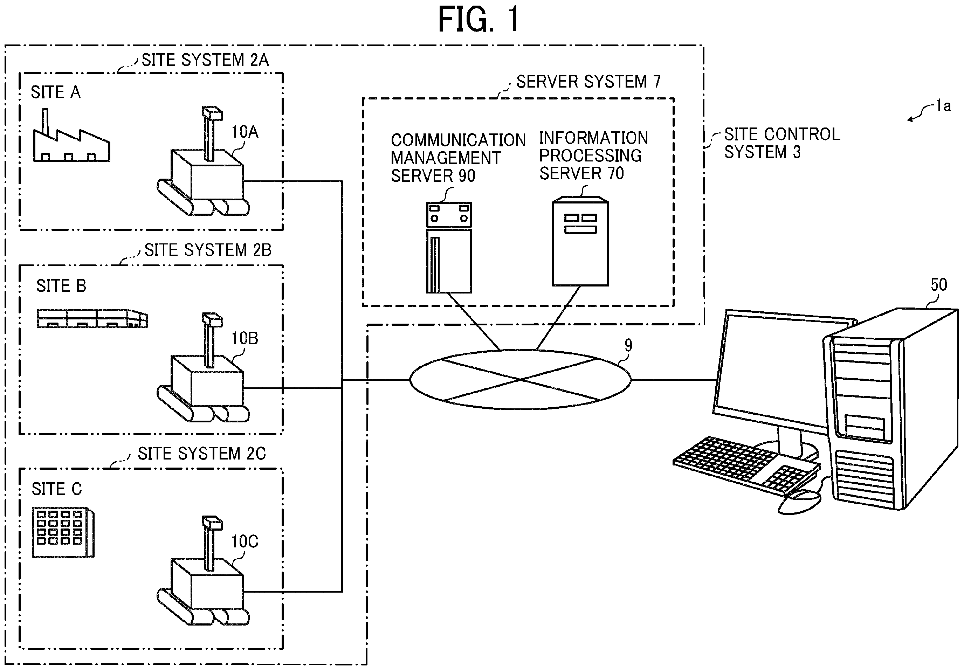

FIG. 1 is an example of system configuration of a remote control system 1a according to an embodiment. The remote control system 1a, illustrated in FIG. 1, is a system that performs a remote communication between a robot 10 disposed at each remote site, and an administrator terminal 50 used by an administrator at a remote location (e.g., control center) to perform control and maintenance works of apparatuses, devices, and equipment disposed at remote sites, and check positions and/or movement of persons present at the remote sites.

The remote control system 1a can be configured with telepresence robots 10A, 10B, and 10C respectively disposed at a plurality of remote sites, such as site A, site B, and site C, an administrator terminal 50, an information processing server 70, and a communication management server 90. Hereinafter, each of the telepresence robots 10A, 10B, and 10C is simply referred to as the robot 10A, robot 10B, robot 10C, and the robots 10A, 10B, and 10C may be collectively referred to as the robot 10 when the distinguishing of the robots 10A, 10B, and 10C is not required. In this description, the robot 10 includes, for example, a robot control system and an image capture-display system.

The robot 10, the administrator terminal 50, the information processing server 70, and the communication management server 90 are communicatively connected via a communication network 9. The communication network 9 is constructed by, for example, local area network (LAN), dedicated line, the Internet, and mobile communication network, or the like. Further, the communication network 9 is not limited to wired communication, but can include a portion of using wireless communication, such 3G (3rd Generation), 4G (4th Generation), 5G (5th Generation), LTE (Long Term Evolution), Wi-Fi (Wireless Fidelity: registered trademark), and WiMAX (Worldwide Interoperability for Microwave Access). Further, the communication network 9 may include a network constructed by a block chain.

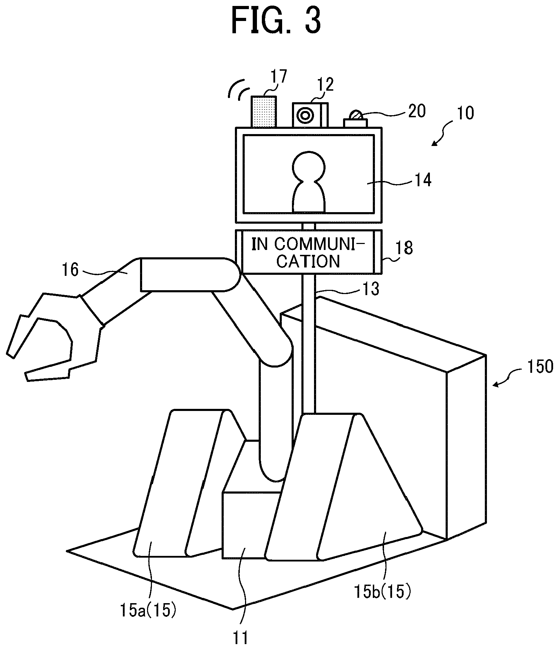

The robot 10 is disposed at each remote site, such as site A, site B, and site C, and is a moveable apparatus that autonomously runs in each of the remote sites. The robot 10 moves inside the site while capturing images of objects around the robot 10 using an image capture device 12 (see FIG. 3), and transmits the images captured by the image capture device 12 to the administrator terminal 50 to provide information, such as images, in the site to the administrator who uses the administrator terminal 50.

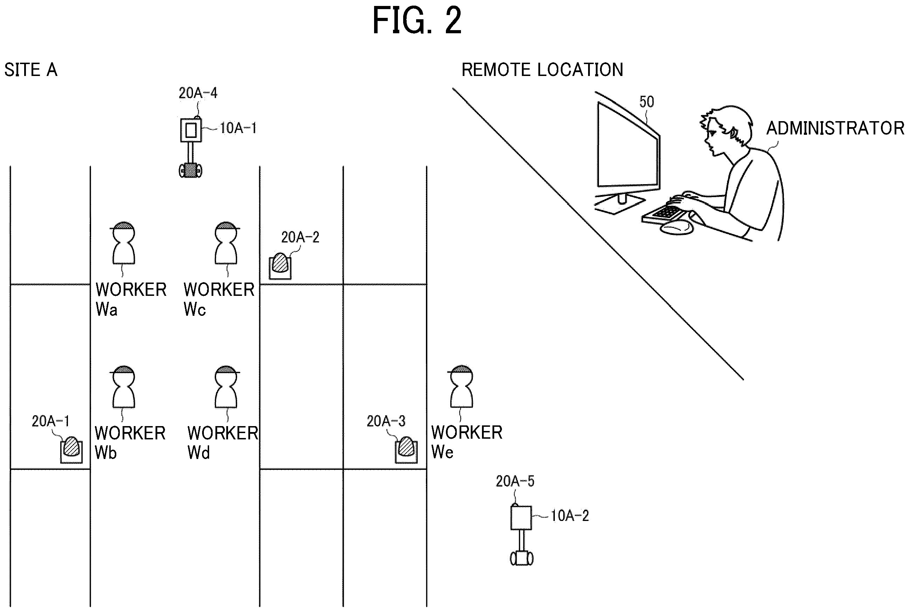

As illustrated in FIG. 2, to be described later, each site where a plurality of robots 10 and users (e.g., workers) are present is provided with one or more calling devices 20 used for calling the administrator located at the remote location. In this description, the calling device 20 may be a calling button, but is not limited thereto. The robot 10 and the calling device 20 disposed at each site are referred to as a site system 2, such as site system 2A, site system 2B, and site system 2C. Hereinafter, the site system 2A, site system 2B, and site system 2C may be simply referred to as the site system 2 when the distinguishing of the site systems 2A, 2B, and 2C is not required.

The administrator terminal 50 is a terminal device, such as personal computer (PC), that performs remote control of each remote site using the robot 10 disposed at each remote site, such as site A, site B, and site C. The administrator terminal 50 displays the captured images transmitted from the robot 10 used at each remote site. The administrator can perform the remote communication with the user (e.g., worker) at each remote site where the robot 10 is disposed while viewing the images displayed on the administrator terminal 50. Further, the administrator can perform remote operation of the robot 10 while viewing the images displayed on the administrator terminal 50.

The administrator terminal 50 may be provided with a display that can display the images transmitted from the robot 10, such as tablet terminal, portable telephone, smart phone, wearable terminal such as head-mountable display (HMD), communication terminal having a wide-angle screen (e.g., cylindrical screen, full-view spherical screen, semi-spherical screen), and personal digital assistant (PDA).

The information processing server 70 is a server for controlling the operation of the robot 10 disposed at each site. The communication management server 90 is a server for controlling or managing communication between the robot 10 disposed at each site and the administrator terminal 50. The information processing server 70 and the communication management server 90 are connected to the robot 10 and the administrator terminal 50 via the communication network 9. Further, the information processing server 70 may be configured as a single computer, or may be configured as a plurality of computers assigned with the functions divided from the total functions (function, means, or storage unit). The same applies to the communication management server 90. The information processing server 70 is an example of information processing apparatus.

The information processing server 70 and the communication management server 90 configure a server system 7. Further, the information processing server 70 and the communication management server 90 can be configured as one computer. Further, the site system 2 and the server system 7 configure a site control system 3.

The site where the robot 10 is disposed at , for example, office, school, warehouse, factory, construction site, or the like. The administrator using the administrator terminal 50 to perform the remote control of each site, can check images of each site transmitted from the robot 10 to confirm positions and movement of persons, such as users, at each site, and to perform management and maintenance of the equipment, devices, and apparatuses disposed in each site. Further, the robot 10 and the administrator terminal 50 can transmit and receive images captured by the robot 10 and the administrator terminal 50 to perform bidirectional communication, such as remote conferences.

Further, the administrator terminal 50 can be configured to communicate with the robots 10 disposed at a plurality of sites, or to communicate with one or more robots 10 disposed at one single site.

Hereinafter, a description is given of a use scene of the remote control system 1a according to the embodiment with reference to FIG. 2. FIG. 2 is an example scene using the remote control system 1a. FIG. 2 is an example of a remote communication between a telepresence robot (robot 10A) disposed at the site A, and the administrator terminal 50 used by the administrator located at a remote location.

In an example case of FIG. 2, the site A is a factory or warehouse, in which a given work is performed by a plurality of workers W, such as workers Wa, Wb, Wc, and Wd. As illustrated in FIG. 2, each worker Wa, Wb, Wc, and Wd performs each work on each work table. Further, the site A is disposed with a plurality of robots 10A, such as robots 10A-1 and 10A-2, that can autonomously move in the site A. Further, the administrator existing at the remote location uses the administrator terminal 50 to perform maintenance and management of the site A by performing remote communication with the robots 10A disposed at the site A.

Further, the site A is disposed with a plurality of calling devices 20A, such as calling devices 20A-1 to 20A-5. The calling devices 20A-1 to 20A-3 are disposed on the work tables, and the calling devices 20A-4 and 20A-5 are mounted on the robots 10A-1 and 10A-2, respectively. A worker present in the site A can call the administrator existing at the remote location using the calling device 20A. In this description, the calling device 20 is used as an operation device for calling the administrator from the user at the site. For example, if any abnormality occurs during the work and a worker wants to communicate with the administrator, the worker can call the administrator existing at the remote location by pressing the calling device 20A disposed at a position closer to the worker. Hereinafter, the worker may be also referred to as the user.

Further, the administrator existing at the remote location receives a notification indicating a call from the user (e.g., worker), in which the pressing of the calling device 20A is used as a trigger of a notification indicating a call from the user. Then, the administrator can communicate with the user (e.g., worker) by initiating remote communication between the administrator terminal 50 and the robots 10A disposed in the site A.

Further, each of the robots 10A-1 and 10A-2 performing the remote communication with the administrator terminal 50 can move to a movement destination, which is set in accordance with a position of the calling device 20A pressed by the each worker, and performs the remote communication with the administrator terminal 50. Therefore, the worker who has pressed the calling device 20A can use the robot 10A to communicate with the administrator at a place where the worker wants to communicate with the administrator.

In a case of using the telepresence robots at a given place, such as the site A illustrated in FIG. 2, in the conventional method, the remote communication can be started only from the administrator (e.g., communication control center), in which the workers at the sites do not have means to call the administrator even if the workers want to communicate with the administrator, which becomes complaints from the workers at the sites.

By contrast, as to the remote control system 1a of the embodiment, the operation device, such as calling device 20 for calling the administrator, is disposed at the site where the robot 10 is disposed, with which the remote communication between each site and the administrator can be also initiated from each site, in which the pressing of the calling device 20 can be used as a trigger of the notification indicating a call from the user. With this configuration, the remote control system 1a can improve the convenience of remote communication using the telepresence robot.

### (Configuration of Robot)

Hereinafter, a description is given of a configuration of the robot 10 according to the embodiment with reference to FIG. 3. FIG. 3 is an example of configuration of the robot 10.

FIG. 3 is one example state, in which the robot 10 is disposed at a charging station 150 for charging a battery of the robot 10. The charging station 150 is disposed in each site and is used to charge the battery of the robot 10 and to detect or measure an operation state of the robot 10. The robot 10 stores the position information of the charging station 150 disposed in the site in advance, and moves to the charging station 150 at a certain time, such as when instructed by a user (e.g., worker) in the site, when instructed by a remote control from the administrator, or when determining a state of remaining battery level automatically. Then, the robot 10 performs the charging of the battery at the charging station 150 during a period when not performing the remote communication with the administrator terminal 50.

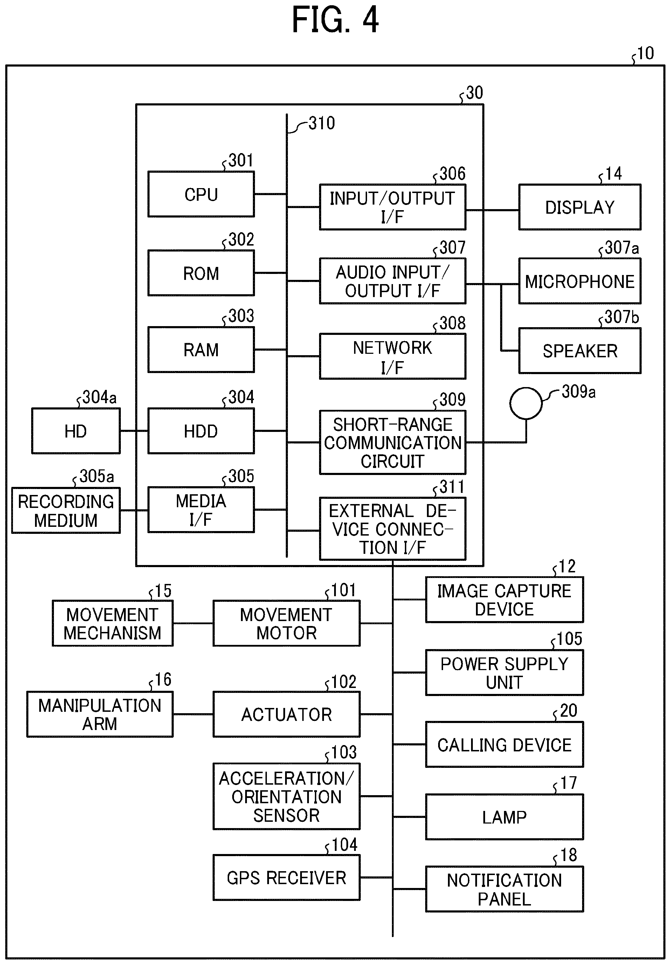

As illustrated in FIG. 3, the robot 10 includes, for example, a housing 11 including a control apparatus 30 (see FIG. 4), an image capture device 12, a support member 13, a display 14, a movement mechanism 15 (15a, 15b) used for moving the robot 10, a manipulation arm 16 used for performing a given work or operation using the robot 10, a lamp 17, a notification panel 18, and a calling device 20.

The calling device 20 is an operation device used by a user who is at each site to call the administrator existing at the remote location. When the user at the site presses the calling device 20 disposed in the site, the calling device 20 transmits notification information to the information processing server 70 for calling the administrator.

Further, the position of the calling device 20 provided on the robot 10 is not limited thereto. For example, the position of the calling device 20 is set preferably at any position where the user (e.g., worker) can press the calling device 20 easily. Further, the calling device 20 may be detachably mounted on the robot 10. In this case, the worker can set the calling device 20 at any position in the site by carrying the calling device 20. The calling device 20, such as the calling devices 20A-1,20A-2, and 20A-3, not mounted on the robot 10 illustrated in FIG. 2, has a similar configuration.

The housing 11, used as a body unit of the robot 10, includes, for example, a power supply unit that supplies power necessary for the robot 10, and the control apparatus 30 that controls processing or operation of the robot 10.

The image capture device 12 captures images of objects, such as persons, physical objects, and scenery, existing at the site where the robot 10 is disposed, and acquires the captured images. The image capture device 12 is, for example, digital camera (general image capture device) that can acquire planar images (detailed images), such as digital single-lens reflex camera, and compact digital camera. The image data of the captured image acquired by the image capture device 12 is transmitted to the administrator terminal 50 via a communication session established by the communication management server 90, to be described later. Further, the captured image acquired by the image capture device 12 may be movie image, still image, or both of movie image and still image. Further, the captured image acquired by the image capture device 12 may include audio data together with the image data.

The display 14 is a display unit for displaying various screens. The display 14 displays, for example, an image of the administrator existing at the remote location, called by pressing the calling device 20.

The support member 13 is a member for setting or fixing the image capture device 12 on the robot 10, such as the housing 11. The support member 13 may be a pole fixed to the housing 11, or a base fixed to the housing 11. Further, the support member 13 may be a movable member that can adjust an image capture direction or orientation and position or height of the image capture device 12.

The movement mechanism 15 is a unit used for moving the robot 10, and is composed of a wheel, a driving motor, a traveling encoder, a steering motor, a steering encoder, or the like. Since the movement control of the robot 10 is an existing technology, the detailed description is omitted. For example, when the robot 10 receives an operation start request from the information processing server 70 or an operator, such as the administrator of the administrator terminal 50, the movement mechanism 15 moves the robot 10 based on the received operation start request or travel instruction. Further, the movement mechanism 15 may be a foot type of two-foot walking, or a single wheel. Further, the shape of the robot 10 is not limited to a vehicle type illustrated in FIG. 3, but can be, for example, a human-type two-foot walking, a form of imitating organism, and a form of copying a specific character.

The manipulation arm 16 has an operation unit that can perform one or more operations, other than the movement of the robot 10. For example, as illustrated in FIG. 3, the manipulation arm 16 has a hand at an one end of the manipulation arm 16 as operation unit that can grip an object. The robot 10 can perform one or more works or operations by rotating or transforming the manipulation arm 16. The manipulation arm 16 can be also referred to as the movable arm.

The lamp 17 and the notification panel 18 notify a communication state of the robot 10 to the user at the site by changing the light emission pattern of the lamp 17 and a display pattern on the notification panel 18 in accordance with the state of the remote communication with the administrator. The lamp 17 and the notification panel 18 are one example of communication state notification unit.

Further, the image capture device 12 may be a wide-angle image capture device capable that can obtain panoramic image of full-view range such as 360-degree image. The wide-angle image capture device is, for example, a full-view spherical image capture device that can obtain two hemispherical images used for generating a full-view spherical image (panorama image) by capturing images of an object. Further, the wide-angle image capture device may be, for example, a wide-angle camera or stereo camera that cam obtain a wide-angle image having an angle of view larger than a given value. That is, the wide-angle image capture device is an imaging unit capable of obtaining or acquiring images (full-view spherical image, wide-angle image) by capturing images using a lens having a focal length shorter than a given value.

Further, the robot 10 may be configured with a plurality of image capture devices 12. In this case, the robot 10 may include a set of the wide-angle image capture device and the general image capture device as the image capture device 12, in which when the wide-angle image capture device captures the wide-angle image, the general image capture device captures a portion of object captured by the wide-angle image capture device to acquire a detailed image (planar image) of the portion of object.

Further, in addition to or other than the above configuration, the robot 10 may have various sensors capable of detecting information around the robot 10. The various sensors include sensor devices, such as barometer, thermometer, photometer, human sensor, or illuminance meter.

### (Hardware Configuration of Remote Control System)

Hereinafter, a description is given of a hardware configuration of each device or terminal configuring the remote control system 1a with reference to FIGs. 4 to 6. Further, one or more elements of the hardware configuration illustrated in FIGs. 4 to 6 may be added or removed as needed.

### (Hardware Configuration of Robot)

FIG. 4 is an example of hardware block diagram of the robot 10 according to the embodiment. The robot 10 includes, for example, the control apparatus 30 used for controlling the processing or operation of the robot 10. As described above, the control apparatus 30 can be provided inside the housing 11 of the robot 10. Further, the control apparatus 30 may be provided outside the housing 11 of the robot 10, or may be provided as an apparatus separate from the robot 10.

The control apparatus 30 includes, for example, a central processing unit (CPU) 301, a read only memory (ROM) 302, a random access memory (RAM) 303, a hard disk drive (HDD) 304, a media interface (I/F) 305, an input/output I/F 306, an audio input/output I/F 307, a network I/F 308, a short-range communication circuit 309, an antenna 309a for the short-range communication circuit 309, an external device connection I/F 311, and a bus line 310.

The CPU 301 controls the robot 10 entirely. The CPU 301 is a computing device for implementing each function of the robot 10 by reading programs or data stored in the ROM 302 or a hard disk (HD) 304a and processing the programs on the RAM 303.

The ROM 302 is a nonvolatile memory that can retain the programs or data even if the power is turned off. The RAM 303 is a volatile memory that is used as a work area of the CPU 301.

The HDD 304 controls the reading or writing of various data to the HD304a under the control of the CPU 301. The HD304a stores various data, such as programs.

The media I/F 305 controls the reading or writing of data to a recording medium 305a, such as universal serial bus (USB) memory, memory card, optical disk, or flash memory.

The input/output I/F 306 is an interface for inputting and outputting characters, numbers, various instructions or the like with various external devices. The input/output I/F 306 controls displaying of various information, such as cursor, menu, window, characters, images, or the like, on the display 14, such as liquid crystal display (LCD). Further, the display 14 may be a touch panel display equipped with an input unit. Further, the input/output I/F 306 may be connected to an input unit, such as mouse, keyboard, or the like, in addition to the display 14.

The audio input/output I/F 307 is a circuit for processing inputting and outputting audio signals with a microphone 307a and a speaker 307b under the control of the CPU 301. The microphone 307a is a built-in type audio collecting unit that inputs audio signals under the control of the CPU 301. The speaker 307b is a reproducing unit that outputs audio signals under the control of the CPU 301.

The network I/F 308 is a communication interface that performs communication (connection) with another device or apparatus via the communication network 9. The network I/F 308 is, for example, a communication interface such as, a wired or wireless local area network (LAN). Further, the network I/F 308 may include a communication interface such as 3G (third Generation), LTE (Long Term Evolution), 4G (fourth Generation), 5G (fifth Generation), Wi-Fi, WiMAX (Worldwide Interoperability for Microwave Access), Zigbee (registered trademark), or millimeter wave radio communication. The short-range communication circuit 309 is a communication circuit, such as near field communication (NFC) or Bluetooth (registered trademark). The external device connection I/F 311 is an interface for connecting the control apparatus 30 to the other device.

The bus line 310 is an address bus and a data bus for electrically connecting each of the components described above, and transmits address signals, data signals, various control signals, or the like. The CPU 301, the ROM 302, the RAM 303, the HDD 304, the media I/F 305, the input/output I/F 306, the audio input/output I/F 307, the network I/F 308, the short-range communication circuit 309 and the external device connection I/F 311 are connected with each other via the bus line 310.

Further, the control apparatus 30 is connected to a movement motor 101, an actuator 102, an acceleration and orientation sensor 103, a global positioning system (GPS) receiver 104, the image capture device 12, the power supply unit 105, the calling device 20, the lamp 17, and the notification panel 18 via the external device connection I/F 311.

The movement motor 101 rotationally drives the movement mechanism 15 based on instructions from the CPU 301 to move the robot 10 on a surface, such as ground. The actuator 102 transforms the manipulation arm 16 based on instructions from the CPU 301. The acceleration and orientation sensor 103 is a sensor, such as electromagnetic compass for detecting geomagnetic magnetism, gyro compass, and acceleration sensor. The GPS receiver 104 receives GPS signals from one or more GPS satellites. The power supply unit 105 is a unit that supplies power necessary for the entire robot 10.

### (Hardware Configuration of Administrator Terminal)

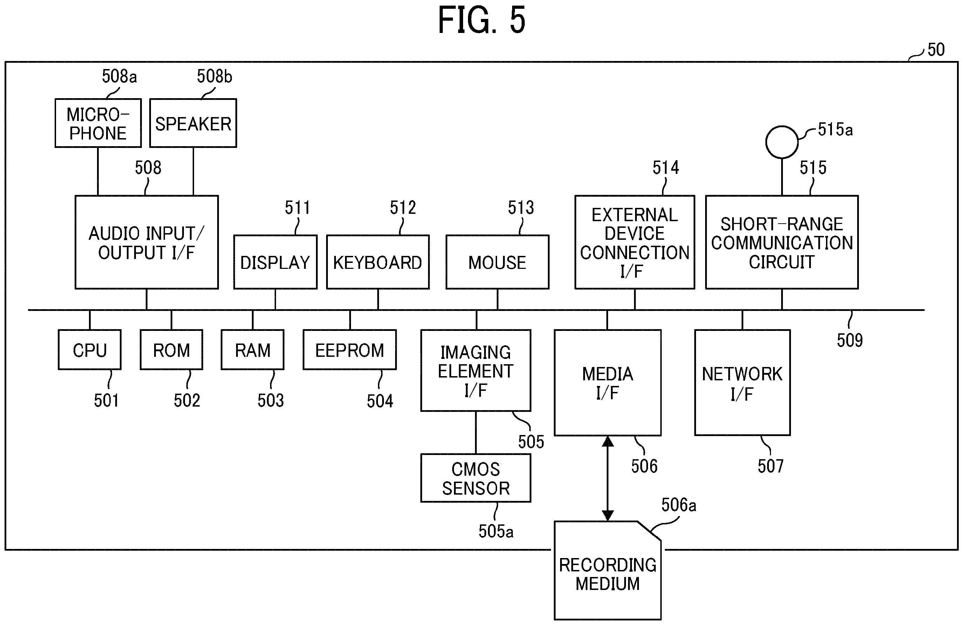

FIG. 5 is an example of hardware block diagram of the administrator terminal 50 according to the embodiment. The administrator terminal 50 includes, for example, a CPU 501, a ROM 502, a RAM 503, an electrically erasable programmable read-only memory (EEPROM) 504, an imaging element I/F 505, complementary metal oxide semiconductor (CMOS) sensor 505a, and a media I/F 506.

The CPU 501 controls the operation of the administrator terminal 50 entirely. The CPU 501 is a computing device for implementing the functions of the administrator terminal 50 by reading programs or data stored in the ROM 502 and processing the programs or data on the RAM 503.

The ROM 502 stores programs used for driving the CPU 501, such as an initial program loader (IPL). The RAM 503 is used as a work area of the CPU 501. The EEPROM 504 reads or writes various data, such as the programs for the administrator terminal, under the control of the CPU 501.

The CMOS sensor 505a captures images of objects, such as self-image, under the control of the CPU 501, and acquires image data. The imaging element I/F 505 is a circuit that controls the driving of the CMOS sensor 505a. The media I/F 506 controls data reading or writing (storing) to the recording medium 506a, such as flash memory or the like.

Further, the administrator terminal 50 includes, for example, a network I/F 507, an audio input/output I/F 508, a microphone 508a, a speaker 508b, a display 511, a keyboard 512, a mouse 513, an external device connection I/F 514, a short-range communication circuit 515, and an antenna 515a for the short-range communication circuit 515.

The network I/F 507 is a communication interface that performs communication (connection) with another device or apparatus via the communication network 9. The network I/F 507 is, for example, a communication interface, such as wired or wireless LAN. Further, the network I/F507 may include a communication interface, such as 3G, LTE, 4G, 5G, Wi-Fi, WiMAX, Zigbee, or millimeter wave radio communication.

The audio input/output I/F 508 is a circuit for processing inputting and outputting audio signals with the microphone 508a and the speaker 508b under the control of the CPU 501. The microphone 508a is a built-in type audio collecting unit that inputs audio signals under the control of the CPU 501. The speaker 508b is a reproducing unit that outputs audio signals under the control of the CPU 501.

The display 511 is a type of display unit, such as liquid crystal display and organic electroluminescent (OEL) display, which displays images of objects and various icons.

The keyboard 512 is a type of input unit including a plurality of keys for inputting characters, numerical numbers, various instructions, or the like. The mouse 513 is a type of input unit for selecting various instructions, selecting processing and executing target, moving a cursor, or the like.

The external device connection I/F 514 is an interface for connecting various external devices. The short-range communication circuit 515 is a communication circuit using, such as NFC or Bluetooth.

The administrator terminal 50 is further provided with a bus line 509. The bus line 509 is an address bus or a data bus for electrically connecting each component, such as the CPU 501 illustrated in FIG. 5.

### (Hardware Configuration of Server)

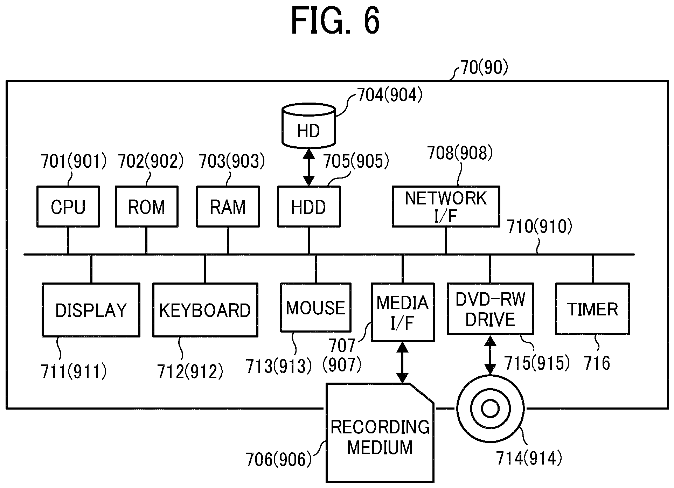

FIG. 6 is an example of hardware block diagram of the information processing server 70 according to the embodiment. The information processing server 70 can be configured using a general computer. The information processing server 70 includes, for example, a CPU 701, a ROM 702, a RAM 703, an HD 704, a HDD 705, a media I/F 707, a network I/F 708, a display 711, a keyboard 712, a mouse 713, a digital versatile disk rewritable (DVD-RW) drive 715, a timer 716, and a bus line 710.

The CPU 701 controls the operation of the information processing server 70 entirely. The ROM 702 stores programs s used for driving the CPU 701. The RAM 703 is used as a work area of the CPU 701.

The HDD 705 controls reading or writing of various data to the HD 704 under the control of the CPU 701. The HD 704 stores various data, such as programs. The media I/F 707 controls reading and writing (storing) data to a recording medium 706, such as flash memory.

The network I/F 708 is an interface for data communication using the communication network 9.

The display 711 displays various information, such as cursor, menu, window, characters, images, or the like.

The keyboard 712 is a type of input unit including a plurality of keys for inputting characters, numerical numbers, various instructions, or the like. The mouse 713 is a type of input unit for is a type of input unit for selecting various instructions, selecting processing and executing target, moving a cursor, or the like.

The DVD-RW drive 715 controls reading or writing of various data to a DVD-RW 714 used as an example of removable recording medium. The removable recording medium is not limited to DVD-RW, but can be DVD-R or the like. Further, the DVD-RW drive 715 may be a Blu-ray drive that controls reading or writing of various data to Blu-ray disc, or a CD-RW drive that controls reading or writing of various data to compact disc disc-rewritable disc (CD-RW).

The timer 716 is a measurement device having a time measurement function. Further, the timer 716 may be a software timer implemented by a computer.

Further, the information processing server 70 includes, for example, a bus line 710. The bus line 710 is an address bus or a data bus for electrically connecting each component, such as the CPU 701 illustrated in FIG. 6.

Further, as illustrated in FIG. 6, the communication management server 90, configured using a general computer, includes, for example, a CPU 901, a ROM 902, a RAM 903, an HD 904, a HDD 905, a media I/F 907, a network I/F 908, a display 911, a keyboard 912, a mouse 913, a DVD-RW drive 915, and a bus line 910. Since these components of the communication management server 90 employ the same or similar configuration of the information processing server 70 such as the CPU 701, the ROM 702, the RAM 703, the HDD 705, the media I/F 707, the network I/F 708, the display 711, the keyboard 712, the mouse 713, the DVD-RW drive 715, and the bus line 710, the description thereof will be omitted.

Further, each of the programs may be prepared as files of installable format or executable format, and may be recorded on a computer-readable recording medium, and distributed. The computer-readable recording medium includes, for example, compact disc recordable (CD-R), DVD, Blu-ray Disc, secure digital (SD) card, or the like. Further, the recording medium can be provided as a program product in one country or abroad. For example, the information processing server 70 implements an information processing method according to the embodiment by executing programs of the embodiment.

### (Functional Configuration of Remote Control System)

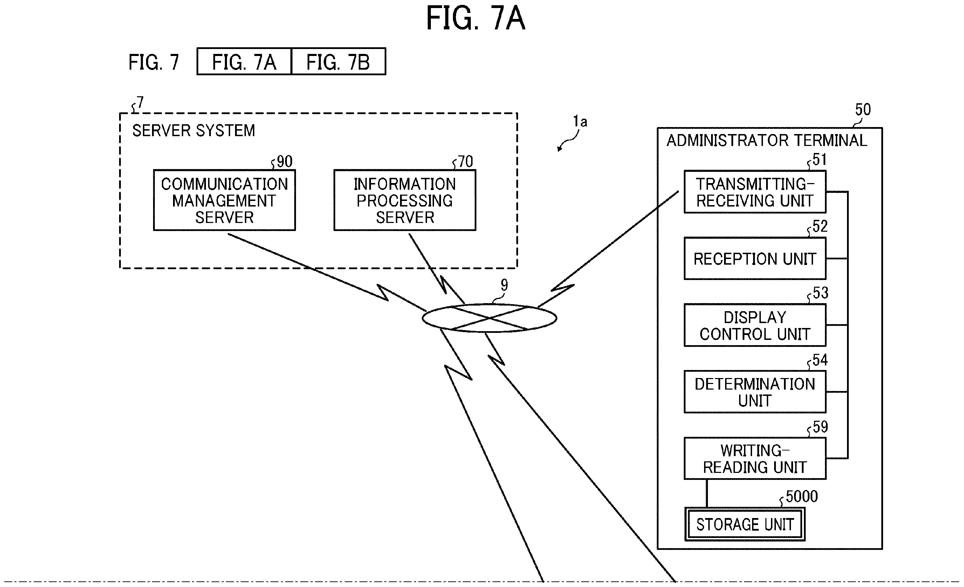

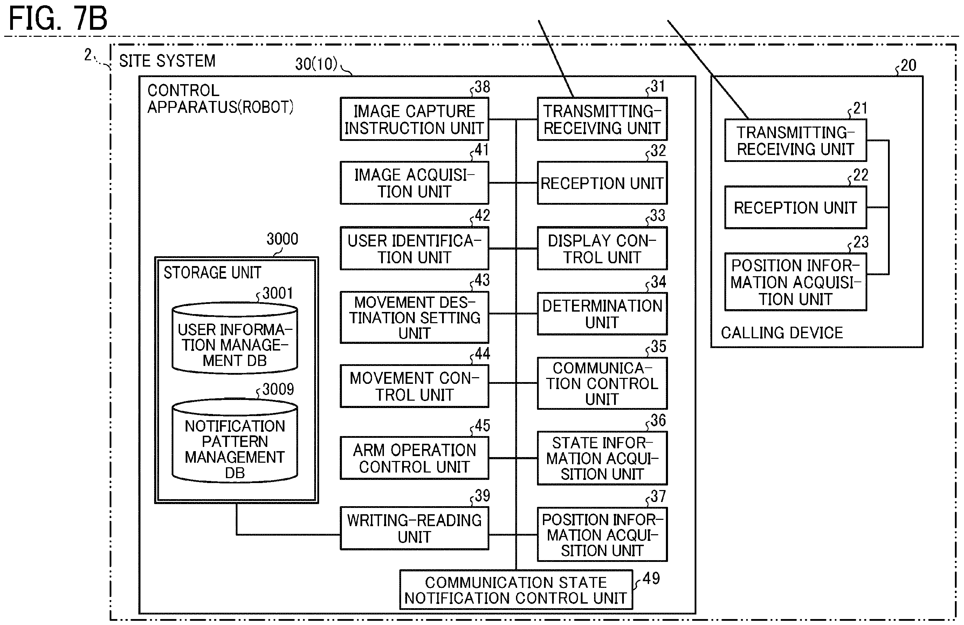

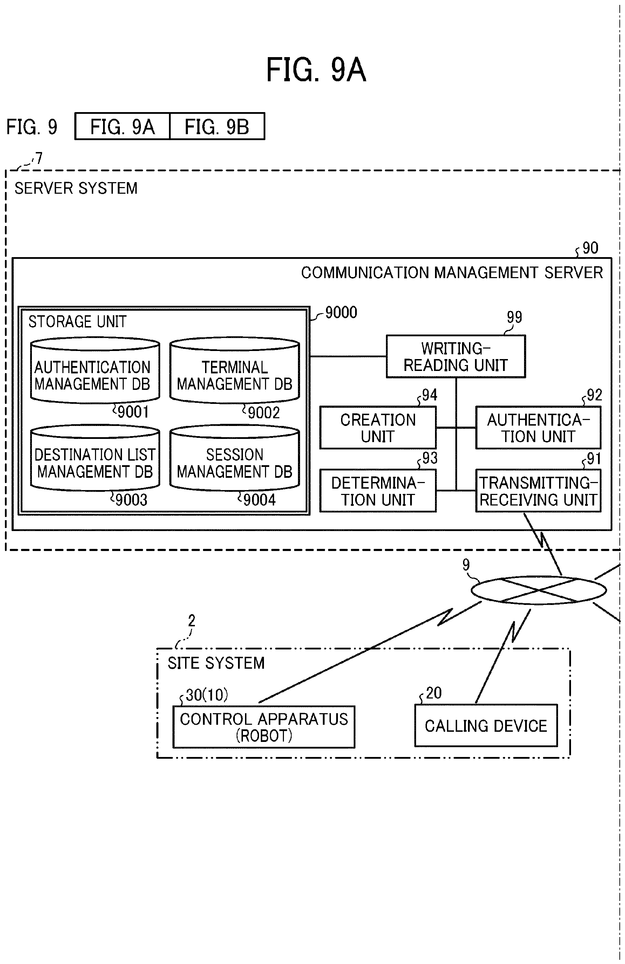

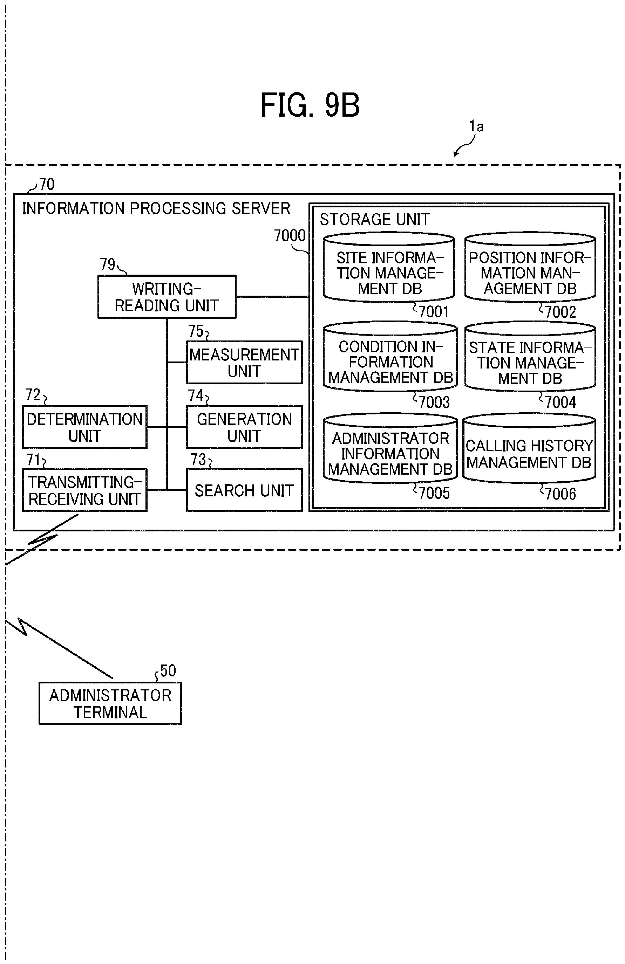

Hereinafter, a description is given of a functional configuration of the remote control system 1a according to the embodiment with reference to FIGs. 7 to 13. FIGs. 7 and 9 illustrate examples of functional configuration of the remote control system 1a. FIGs. 7 and 9 illustrates the terminal, apparatus, device, and server illustrated in FIG. 1, which are related to processing or operation to be described later.

### (Functional Configuration of Control Apparatus)

Hereinafter, a description is given of a functional configuration of the control apparatus 30 used for controlling the processing or operation of the robot 10 with reference to FIGs. 7A and 7B.

As illustrated in FIG. 7B, the control apparatus 30 includes, for example, a transmitting-receiving unit 31, a reception unit 32, a display control unit 33, a determination unit 34, a communication control unit 35, a state information acquisition unit 36, a position information acquisition unit 37, an image capture instruction unit 38, an image acquisition unit 41, a user identification unit 42, a movement destination setting unit 43, a movement control unit 44, an arm operation control unit 45, a communication state notification control unit 49, and a writing-reading unit 39. Each of these units is a functional unit or function that is implemented by any of the components illustrated in FIG. 4 under the instructions received from the CPU 301 executing programs loaded on the RAM 303. Further, the control apparatus 30 includes a storage unit 3000, implemented by the ROM 302, the HD304a, or the recording medium 305a illustrated in FIG. 4. The storage unit 3000 is an example of memory or storage means.

The transmitting-receiving unit 31, implemented by the instruction received from the CPU 301 and the network I/F 308 (see FIG. 4), is a functional unit that transmits and receives various data or information from other devices via the communication network 9. For example, the transmitting-receiving unit 31 receives operation start request information requesting an operation of the robot 10 via the communication network 9 from the information processing server 70, via the communication network 9. Further, the transmitting-receiving unit 31 transmits the captured image data acquired by the image acquisition unit 41 to the administrator terminal 50. The transmitting-receiving unit 31 is an example of acquisition unit.

The reception unit 32, implemented by the instruction received from the CPU 301 and the input/output I/F 306 (see FIG. 4), is a functional unit that receives an operation input to the input unit, such as the display 14.

The display control unit 33, implemented by the instruction received from the CPU 301 and the input/output I/F 306 (see FIG. 4), is a functional unit that displays various screens on the display 14.

The determination unit 34, implemented by the instruction received from the CPU 301 (see FIG. 4), is a functional unit that performs various determinations.

The communication control unit 35, implemented by the instruction received from the CPU 301 (see FIG. 4), is a functional unit that controls the remote communication with the administrator terminal 50. The communication control unit 35 is an example of communication control unit.

The state information acquisition unit 36, implemented by the instruction received from the CPU 301 and the external device connection I/F 311 (see FIG. 4), is a functional unit that acquires state information indicating a state of the robot 10. For example, the state information acquisition unit 36 acquires the state information of the robot 10, such as connection state of external device to the robot 10, remaining battery level of the robot 10 acquired from the power supply unit 105, and driving state of the movement mechanism 15 acquired from the movement control unit 44.

The position information acquisition unit 37, implemented by the instruction received from the CPU 301 and the external device connection I/F 311 (see FIG. 4), is a functional unit that acquires detection results, such as direction of each bearing (azimuth, magnetic north) detected by the acceleration and orientation sensor 103 or the GPS receiver 104. The detection results of the direction of each bearing corresponds to position information indicating a position and direction of the robot 10 at a given time point.

The image capture instruction unit 38, implemented by the instruction received from the CPU 301 and the external device connection I/F 311 (see FIG. 4), is a functional unit that instructs the image capture device 12 to perform the image capturing processing. For example, the image capture instruction unit 38 transmits instruction information to the image capture device 12 for instructing the image capture device 12 to capture images.

The image acquisition unit 41, implemented by the instruction received from the CPU 301 and the external device connection I/F 311 (see FIG. 4), is a functional unit that acquires the captured image acquired by the image capture device 12. For example, the image acquisition unit 41 acquires, from the image capture device 12, the image data of image captured and acquired by the image capture device 12.

The user identification unit 42, implemented by the instruction received from the CPU 301 (see FIG. 4), is a functional unit that identifies a user (e.g., worker) who has pressed the calling device 20 disposed in the site. For example, the user identification unit 42 identifies a user (e.g., worker) who has pressed the calling device 20 by recognizing a face image included in the captured image acquired by the image acquisition unit 41,

The movement destination setting unit 43, implemented by the instruction received from the CPU 301 (see FIG. 4), is a functional unit that sets a movement destination of the robot 10. For example, the movement destination setting unit 43 sets the movement destination of the robot 10 based on the operation start request information transmitted from the information processing server 70. The movement destination setting unit 43 is an example of setting unit.

The movement control unit 44, implemented by the instruction received from the CPU 301 and the external device connection I/F 311 (see FIG. 4), is a functional unit that drives the movement mechanism 15 to control a movement of the robot 10. For example, the movement control unit 44 controls the driving of the movement mechanism 15 based on the operation start request information transmitted from the information processing server 70 to move the robot 10. The movement control unit 44 is an example of movement control unit.

The arm operation control unit 45, implemented by the instruction received from the CPU 301 and the external device connection I/F 311 (see FIG. 4), is a functional unit that controls an operation of the manipulation arm 16. For example, the arm operation control unit 45 transforms the manipulation arm 16 based on an operation request transmitted from the administrator terminal 50 to change a direction of the manipulation arm 16.

The communication state notification control unit 49, implemented by the instruction received from the CPU 301 and the external device connection I/F 311 (see FIG. 4), controls a notification of communication state or condition using the lamp 17 and the notification panel 18.

The writing-reading unit 39, implemented by the instruction received from the CPU 301 (see FIG. 4), is a functional unit that stores various data into the storage unit 3000 or reads various data from the storage unit 3000. The storage unit 3000 overwrites the image data and audio data that are received during a communication with the administrator terminal 50 every time the image data and audio data is received. Among these data, image data before being overwritten is displayed as an image on the display 14, and audio data before being overwritten is output as audio from the speaker 307b.

Further, the storage unit 3000 stores the captured image data acquired by the image acquisition unit 41. Further, the captured image data stored in the storage unit 3000 may be deleted when a given time period has elapsed after the captured image data is acquired by the image acquisition unit 41, or the data transmitted to the administrator terminal 50 may be deleted from the storage unit 3000.

### (User Information Management Table)

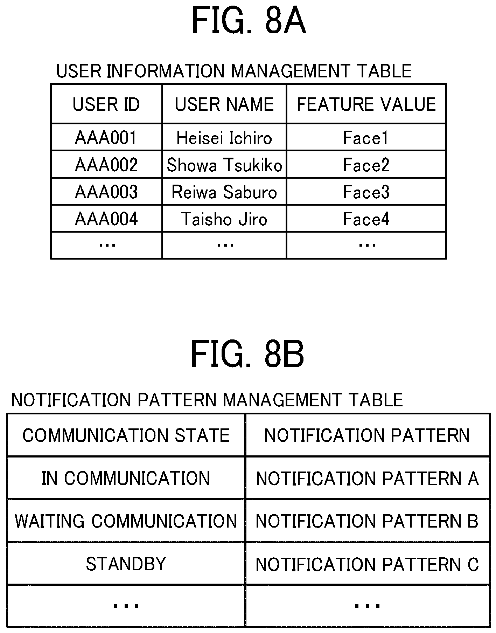

FIG. 8A is an example of user information management table. The storage unit 3000 stores a user information management database (DB) 3001 including the user information management table illustrated in FIG. 8A. The user information management table stores information, such as user ID, user name, and feature value in association each other to identify a user (e.g., worker) existing at a site where the robot 10 is disposed in association each other.

The feature value is a value for identifying one or more faces of one or more persons included in the captured image data acquired by the image acquisition unit 41. The user information management table is used when checking a face of person (i.e., processing target) included in the image data (face matching) using the user identification unit 42.

### (Notification Pattern Management Table)

FIG. 8B is an example of a notification pattern management table. The storage unit 3000 includes a notification pattern management DB 3009 storing the notification pattern management table illustrated in FIG. 8B. The notification pattern management table stores information indicating communication state with the administrator terminal 50, and notification patterns corresponding to the communication state in association with each other.

The communication state includes, for example, a state of "in communication" indicating that a communication is being performed with another user or an administrator, a state of "waiting communication" indicating that a communication with another user or administrator is being reserved, and a state of "standby" indicating that a processing for initiating communication with another user or administrator is not yet performed.

Further, the notification pattern shows a notification method, with which a user can visually recognize the communication state of the robot 10. The notification pattern indicates, for example, light emission methods of the lamp 17 set differently in accordance with the communication states. The lamp 17 emits light patterns for each of the notification patterns, for example, by emitting the light using different colors or blinking or flashing patterns.

### (Functional Configuration of Administrator Terminal)

Hereinafter, a description is given of a functional configuration of the administrator terminal 50 with reference to FIG. 7A. The administrator terminal 50 includes, for example, a transmitting-receiving unit 51, a reception unit 52, a display control unit 53, a determination unit 54, and a writing-reading unit 59. Each of these units is a functional unit or function that is implemented by any of the components illustrated in FIG. 5 under the instructions received from the CPU 501 executing programs loaded on the RAM 503.

Further, the administrator terminal 50 includes a storage unit 5000, implemented by the ROM 502 or the recording medium 506a illustrated in FIG. 5. The storage unit 5000 is an example of memory or storage means. Further, the administrator terminal 50 is installed with one or more dedicated application programs for remotely controlling the robot 10. The administrator terminal 50 implements each function by executing, for example, the installed application programs by the CPU 501.

The transmitting-receiving unit 51, implemented by the instruction received from the CPU 501 and the network I/F 507 (FIG. 5), is a functional unit that transmits and receives various data or information to and from other devices via the communication network 9. For example, the transmitting-receiving unit 51 receives image data transmitted from the robot 10 (control apparatus 30) via the communication network 9. Further, the transmitting-receiving unit 51 receives from the robot 10 (control apparatus 30), for example, the state information indicating a state of the robot 10, via the communication network 9. The transmitting-receiving unit 51 is an example of communication request receiving unit. Further, the transmitting-receiving unit 51 is an example of communication unit.

The reception unit 52, implemented by the instruction received from the CPU 501 and the input unit such as keyboard 512 or mouse 513 (FIG. 5), is a functional unit that receives various selection or operation inputs to the administrator terminal 50.

The display control unit 53, implemented by the instruction received from the CPU 501 (FIG. 5), is a functional unit that displays various screens on the display 511 of the administrator terminal 50.

The determination unit 54, implemented by the instruction received from the CPU 501 (FIG. 5), is a functional unit that performs various determinations.

The writing-reading unit 59, implemented by the instruction received from the CPU 501 (see FIG. 5), is a functional unit that stores various data into the storage unit 5000 or reads various data from the storage unit 5000. The storage unit 5000 overwrites the image data and audio data that are received during a communication with the robot 10 (control apparatus 30) every time the image data and audio data is received. Among these data, image data before being overwritten is displayed as an image on the display 511, and audio data before being overwritten is output as audio from the speaker 508b.

### (Functional Configuration of Information Processing Server)

Hereinafter, a description is given of a functional configuration of the information processing server 70 with reference to FIGs. 9A and 9B (FIG. 9).

The information processing server 70 includes, for example, a transmitting-receiving unit 71, a determination unit 72, a search unit 73, a generation unit 74, a measurement unit 75, and a writing-reading unit 79. Each of these units is a functional unit or function that is implemented by any of the components illustrated in FIG. 6 under the instructions received from the CPU 701 executing programs loaded on the RAM 703. Further, the information processing server 70 includes a storage unit 7000, implemented by the ROM 702, the HD 704, and the recording medium 706 illustrated in FIG. 6. The storage unit 7000 is an example of memory or storage means.

The transmitting-receiving unit 71, implemented by the instruction received from the CPU 701 and the network I/F 708 (FIG. 6), is a functional unit that transmits and receives various data or information to and from other devices via the communication network 9. For example, the transmitting-receiving unit 71 receives, from the calling device 20 via the communication network 9, notification information that is transmitted when the calling device 20 is selected.

Further, for example, the transmitting-receiving unit 71 transmits to the robot 10 via the communication network 9, the operation start request information requesting the start of operation to move the robot 10 to a specific movement destination.

Further, the transmitting-receiving unit 71 transmits to the administrator terminal 50, a communication request for performing the remote communication between the robot 10.

The transmitting-receiving unit 71 is an example of notification information receiving unit. Further, the transmitting-receiving unit 71 is an example of output unit. Further, the transmitting-receiving unit 71 is an example of communication request transmitting unit.

The determination unit 72, implemented by the instruction received from the CPU 701 (FIG. 6), is a functional unit that performs various determinations.

The search unit 73, implemented by the instruction received from the CPU 701 (FIG. 6), is a functional unit that searches the robot 10 to be requested to perform a specific operation based on the notification information transmitted from the calling device 20. The search unit 73 is an example of determination unit.

The generation unit 74, implemented by the instruction received from the CPU 701 (FIG. 6), is a functional unit that generates various data or information. For example, the generation unit 74 generates communication history information indicating a communication history of the robot 10 and the administrator terminal 50.

The measurement unit 75, implemented by the instruction received from the CPU 701 and the timer 716 (see FIG. 6), measures a processing time of establishing a communication session between the robot 10 and the administrator terminal 50.

The writing-reading unit 79, implemented by the instruction received from the CPU 701 (see FIG. 6), is a functional unit that stores various data into the storage unit 7000 or reads various data from the storage unit 7000.

### (Site Information Management Table)

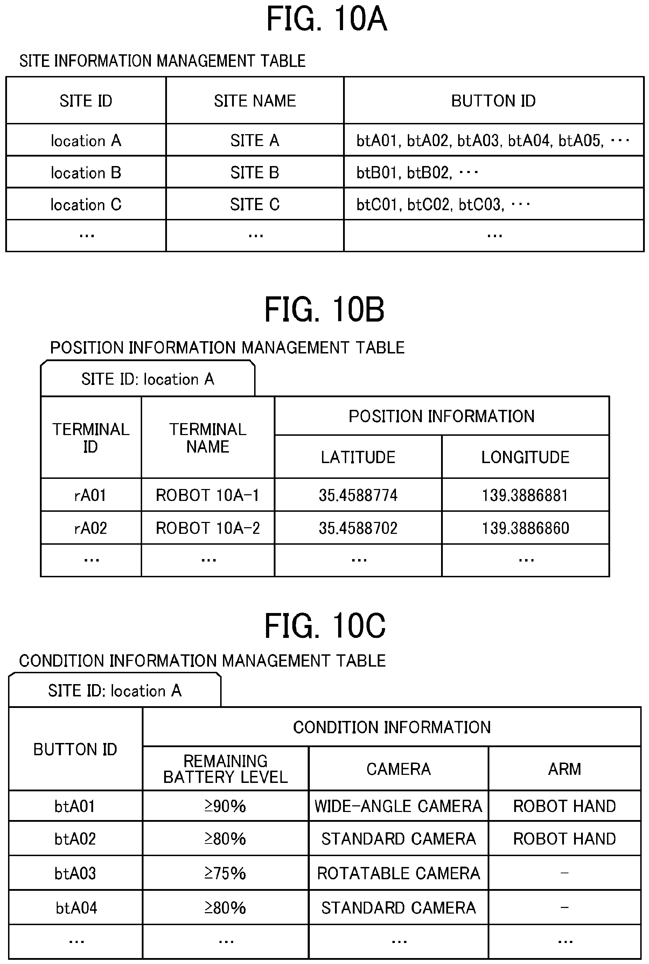

FIG. 10A is an example of site information management table. The storage unit 7000 stores a site information management DB 7001 including the site information management table illustrated in FIG. 10A. The site information management table stores information, such as site identification (ID), site name, and button ID in association each other. The site ID and site name identify each site where the robot 10 to be controlled (i.e., control target) by the information processing server 70 is disposed, and the button ID identifies the calling device 20 disposed at each site. The button ID is an example of the device ID identifying each calling device 20.

When the calling device 20 is pressed by a user (e.g., worker) at a particular site, the information processing server 70 identifies the particular site where the robot 10 to be controlled (i.e., control target) is disposed, based on the button ID of the calling device 20 which has transmitted the notification information,

### (Position Information Management Table)

FIG. 10B is an example of position information management table. The storage unit 7000 stores a position information management DB 7002 including the position information management table in FIG. 10B. The position information management table stores information, such as terminal ID and terminal name identifying the robot 10, and position information indicating a position of the robot 10 in association each other, for each site ID. The position information includes, for example, information of latitude and longitude of the robot 10, and is transmitted from the robot 10 to the information processing server 70 at a given time. Further, a format of the position information is not limited to the information of latitude and longitude, but any information that can determine the position of the robot 10 in the site can be used.

### (Condition Information Management Table)

FIG. 10C is an example of condition information management table. The storage unit 7000 stores a condition information management DB 7003 including the condition information management table illustrated in FIG. 10C. The conditional information management table stores information, such as button ID identifying the calling device 20, and condition information indicating a particular condition to be transmitted as a control request to the robot 10 in association each other, for each site ID. The condition information includes, for example, one or more information items related to capabilities or operation state of the robot 10. The one or more information items included in the condition information include, for example, remaining battery level of the robot 10 (remaining battery level), capabilities of the image capture device 12 (camera), and/or capabilities of the manipulation arm 16.

Further, the information items included in the condition information are not limited thereto. For example, the one or more information items included in the condition information include the number of times the operation start request has been issued from the information processing server 70 to the robot 10, and usage history information such as used frequency. Further, the information items included in the condition information may be similar to those included in the state information stored in a state information management DB 7004, to be described later.

The condition information includes an item of remaining battery level, which indicates threshold values of remaining battery level of the robot 10, to be required to be controlled. For example, when a selection of the calling device 20A identified by a button ID of "btA01" is used as a trigger of the control request, the condition of remaining battery level is set 90% or more (≥ 90%).

Further, the condition information includes an item of camera, which indicates threshold values of capabilities of the image capture device 12 provided for the robot 10. In an example case of FIG. 10C, the threshold values of capabilities of the image capture device 12 indicates an image capturable range of the image capture device 12 corresponding to a type of the image capture device 12. In this example case, the order of the capabilities of the image capture device 12 is a wide-angle camera, a rotatable camera, and a standard camera from high from low order. The rotatable camera is a camera including a rotation mechanism, which can capture images while changing the image capture direction. The standard camera is a general digital camera that can acquire planar images (detailed images).

For example, when a selection of the calling device 20A identified by a button ID of "btA02" is used as a trigger of the control request, the condition of camera is that the robot 10 has capabilities of the standard camera or more. Further, when a selection of the calling device 20A identified by a button ID of "btA03" is used as a trigger of the control request, the condition of camera is that the robot 10 has capabilities of the rotatable camera or more.

Further, the threshold values of the capabilities of the image capture device 12 may be conditions defined by numerical values of resolution and image capture range.

Further, the condition information includes an item of arm, which indicates threshold values of capabilities of the manipulation arm 16 provided for the robot 10. For example, when a selection of the calling device 20A identified by a button ID of "btA01" is used as a trigger of the control request, the condition of arm is that the robot 10 has a robot hand.

As described above, the condition information management table can set different condition information for each site and each calling device 20, with which by setting the type of site or the disposed position of the calling device 20, the condition of the control request to the robot 10 can be set. Further, the information processing server 70 may be configured to add and modify the contents of condition information included in the condition information management table as needed.

### (State Information Management Table)

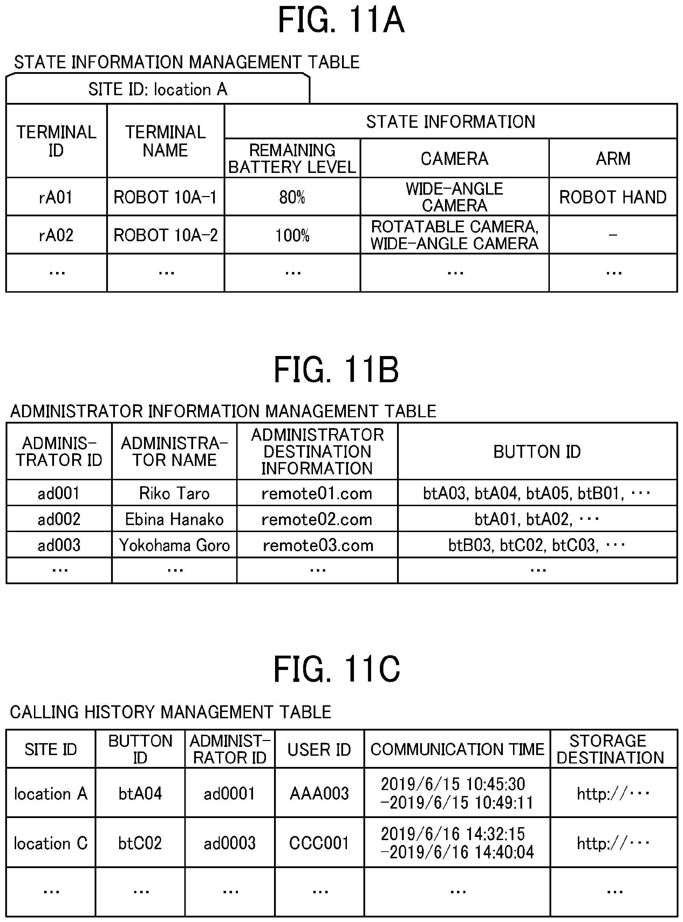

FIG. 11A is an example of state information management table. The storage unit 7000 stores a state information management DB 7004 including the state information management table in FIG. 11A. The state information management table stores information, such as terminal ID and terminal name identifying the robot 10, and state information indicating a state of the robot 10 in association each other for each site ID. The state information includes information item, such as data or information indicating capabilities of the robot 10 and the current operation state. The information items included in the state information are the same as those in the condition information included in the condition information management table of FIG. 10C.

The state information of the robot 10 is transmitted to the information processing server 70 from each of the robot 10 disposed at each site at any time or periodically. Then, the information processing server 70 determines whether a control request to the robot 10 is to be issued based on the state information included in the state information management table and the condition information included in the condition information management table.

### (Administrator Information Management Table)

FIG. 11B is an example of administrator information management table. The storage unit 7000 stores an administrator information management DB 7005 including the administrator information management table illustrated in FIG. 11B.

The administrator information management table stores information, such as administrator ID and administrator name identifying each administrator who controls or manages each site corresponding to each remote place, administrator destination information indicating a destination of each administrator, and button ID identifying the calling device 20 in association each other.

The administrator destination information includes, for example, administrator email address, or application ID of application allocated for each administrator. Further, for example, if the administrator uses the dedicated administrator terminal 50, the administrator destination information may be internet protocol (IP) address indicating address of the administrator terminal 50.

Further, the administrator information management table includes the button ID of the calling device 20 associated with each administrator as a management target. When a particular calling device 20 is selected by a user (e.g., worker) at a particular site, the information processing server 70 notifies a particular administrator associated with the particular calling device 20, a communication request with the robot 10 disposed in the particular site.

### (Calling History Management Table)

FIG. 11C is an example of calling history management table. The storage unit 7000 stores a calling history management DB 7006 including the calling history management table illustrated in FIG. 11C. The calling history management table stores information, such as terminal ID, button ID, administrator ID, user ID, communication time, and storage destination in association each other.

The button ID identifies the calling device 20 selected by the user (e.g., worker). The administrator ID identifies an administrator who has performed the remote communication with the robot 10 using the administrator terminal 50. The user ID identifies the user (e.g., worker) who has selected the calling device 20. The communication time indicates a time period of remote communication between the administrator terminal 50 and the robot 10 in response to the selection of the calling device 20. The storage destination indicates a link of storage destination of the calling history information indicating history information of remote communication between the administrator terminal 50 and the robot 10.

When the remote communication between the administrator terminal 50 and the robot 10 is terminated, the information processing server 70 generates the calling history information and stores the generated calling history information to the storage destination included in the calling history management table.

Further, the site ID, button ID, administrator ID, user ID and communication time are just examples of the calling history data, and some of the site ID, button ID, administrator ID, user ID and communication time may not be included as the items as the calling history data.

### (Functional Configuration of Communication Management Server)

Hereinafter, a description is given of a functional configuration of the communication management server 90 with reference to FIGs. 9A and 9B (FIG. 9).

As illustrated in FIG. 9A, the communication management server 90 includes, for example, a transmitting-receiving unit 91, an authentication unit 92, a determination unit 93, a creation unit 94, and a writing-reading unit 99. Each of these units is a functional unit or function that is implemented by any of the components illustrated in FIG. 6 under the instructions received from the CPU 901 executing programs loaded on the RAM 903. Further, the communication management server 90 includes a storage unit 9000, implemented by the ROM 902, the HD 904, and the recording medium 906 illustrated in FIG. 6.

The transmitting-receiving unit 91, implemented by the instruction received from the CPU 901 and the network I/F 908 (FIG. 6), is a functional unit that transmits and receives various data or information to and from other devices via the communication network 9.

The authentication unit 92, implemented by the instruction received from the CPU 901 (FIG. 6), and is a functional unit that authenticate a login request source based on login request information received by the transmitting-receiving unit 91. For example, the authentication unit 92 uses a terminal ID and a password included in the login request received by the transmitting-receiving unit 91 as a search key to search the authentication management DB 9001 in the storage unit 9000. Then, the authentication unit 92 performs a terminal authentication by determining whether the same set of terminal ID and password is stored in the authentication management DB 9001.

The determination unit 93, implemented by the instruction received from the CPU 901 (FIG. 6), is a functional unit that determines whether a terminal ID of the administrator terminal 50 is already stored in a session management table, to be described later.

The creation unit 94, implemented by the instruction received from the CPU 901 (FIG. 6), is a functional unit that create a session ID used for a communication.

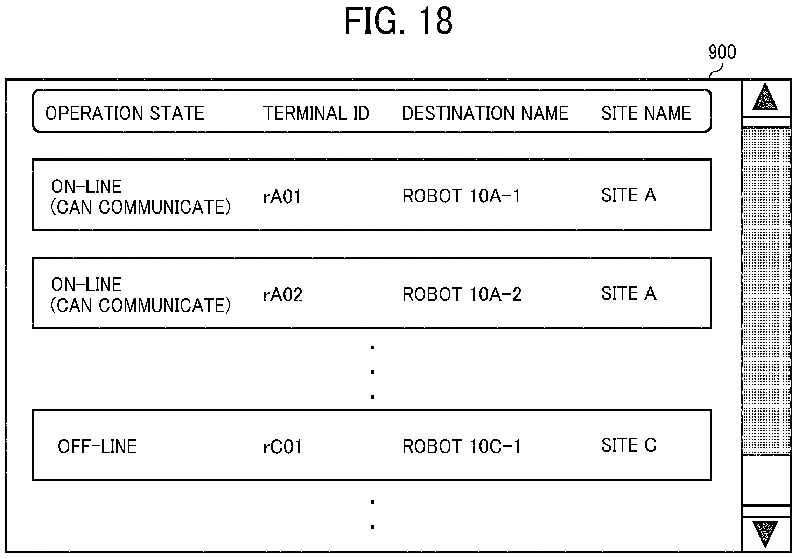

The writing-reading unit 99, implemented by the instruction received from the CPU 901 (see FIG. 6), is a functional unit that stores various data into the storage unit 9000 or reads various data from the storage unit 9000. The storage unit 9000 stores destination list frame data to be displayed on a destination list screen 900 (see FIG. 18), which will be described later. The destination list frame data does not include icons illustrated in FIG. 18, such as "rA01," "robot 10A-1," or the like.

### (Authentication Management Table)

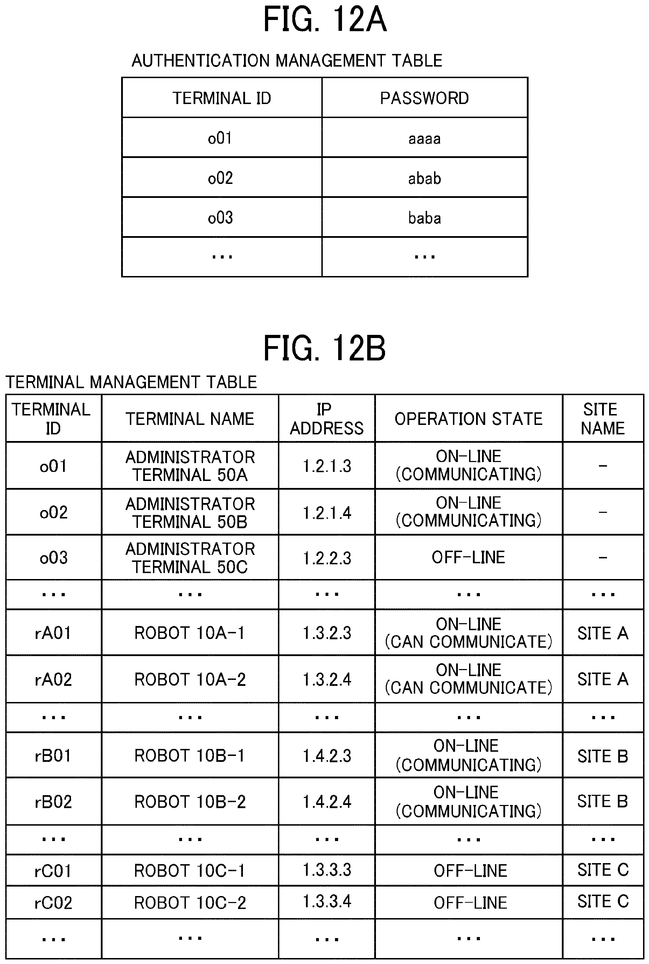

FIG. 12A is an example of authentication management table. The storage unit 9000 stores an authentication management DB 9001 including the authentication management table illustrated in FIG. 12A.

The authentication management table stores information, such as terminal ID and password in association each other for each terminal ID of each management terminal 50 managed by the communication management server 90. For example, as to the authentication management table illustrated in FIG. 12A, the terminal ID of the administrator terminal 50A is "o01" and the associated password is "aaaa."

### (Terminal Management Table)

FIG. 12B is an example of terminal management table. The storage unit 9000 stores a terminal management DB 9002 including the terminal management table illustrated in FIG. 12B.

The terminal management table stores information, such as terminal ID of each terminal, terminal name of each terminal, IP address of each terminal, operational state information indicating the current operation state of each terminal, and site name where the robot 10 is disposed in association each other for each terminal ID of the robot 10 or the administrator terminal 50. For example, as to the terminal management table illustrated in FIG. 12B, the administrator terminal 50 having the terminal ID of "o01" has the terminal name of "administrator terminal 50A," the IP address of the administrator terminal 50 of "1.2.1.3," and the operation state of "on-line (can communicate).

Further, the robot 10 having the terminal ID of "rA01" has the terminal name of "robot 10A-1," the IP address of the robot 10 of "1.3.2.3" and the operation state of "on-line (can communicate)," and the site name of "site A."

### (Destination List Management Table)

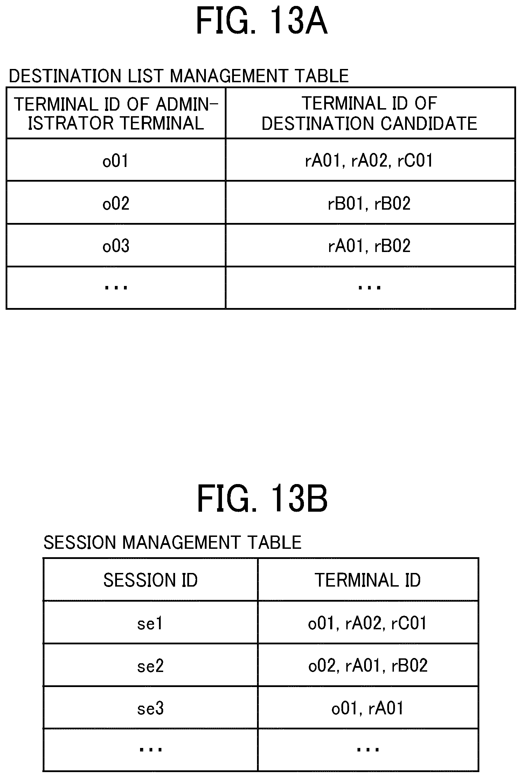

FIG. 13A is an example of destination list management table. The storage unit 9000 stores a destination list management DB 9003 including the destination list management table illustrated in FIG. 13A.

The destination list management table stores information, such as terminal ID of the administrator terminal 50 and terminal ID of the robot 10 in association each other, in which the terminal ID of the administrator terminal 50 identifies a starting terminal for requesting a start of communication with the robot 10, and the terminal ID of the robot 10 indicates the destination candidate of the robot 10 registered as the destination.

For example, as to the destination list management table illustrated in FIG. 13A, the destination candidate that the starting terminal having the terminal ID of "o01" (administrator terminal 50A) can request the start of communication includes the robot 10A-1 having the terminal ID of "rA01," the robot10A-2 having the terminal ID of "rA02," and the robot 10C-1 having the terminal ID of "rC01."

Further, the terminal ID of the robot 10 of the destination candidate can be updated by adding or deleting the terminal ID of the robot 10 of the destination candidate by an addition or deletion request from any starting terminal (administrator terminal 50) to the communication management server 90.

### (Session Management Table)

FIG. 13B is an example of session management table. The storage unit 9000 stores a session management DB 9004 including the session management table illustrated in FIG. 13B.

The session management table stores information, such as session ID, and terminal ID of the robot 10 and terminal ID of the administrator terminal 50 in association each other, in which the session ID identifies each session used for communication between the robot 10 and the administrator terminal 50, and the terminal ID of the robot 10 and the terminal ID of the administrator terminal 50 identify of the robot 10 and the administrator terminal 50 using the session identified by the session ID. For example, as to the session management table illustrated in FIG. 13B, the terminal using the session performed using the session ID of "sel" is the administrator terminal 50A having the terminal ID of "o01," the robot 10A-2 having the terminal ID of "rA02," and the robot 10C-1 having the terminal ID of "rC01."

### (Operation and Processing)

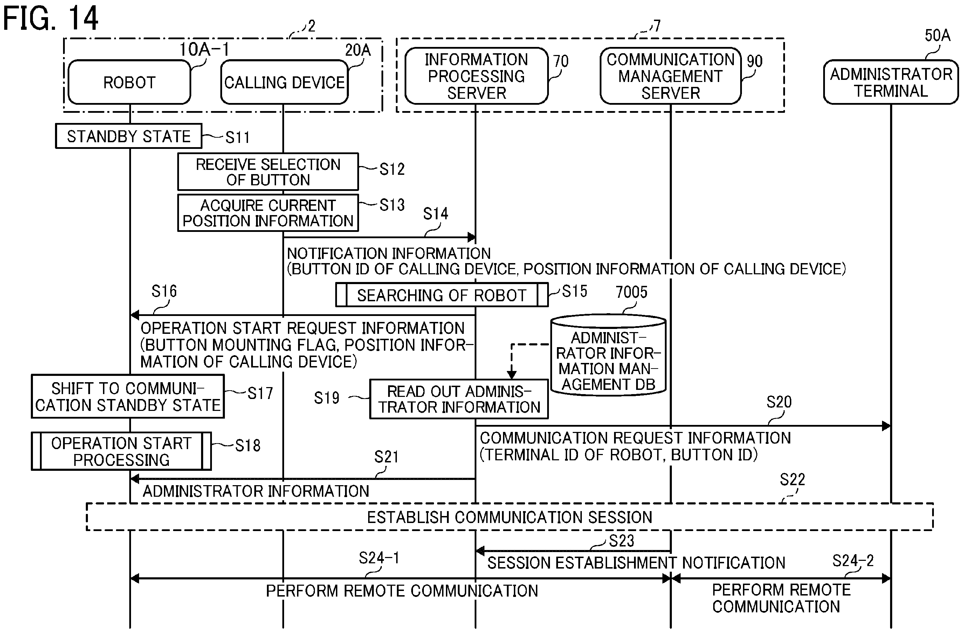

Hereinafter, a description is given of operation and processing of the remote control system 1a according to the embodiment of with reference to FIGs. 14 to 28. In the following description, the processing performed by the control apparatus 30 provided for the robot 10 is described as the processing performed by the robot 10.

### (Calling from Site System)

Hereinafter, a description is given of a process of calling an administrator at a remote location from a user (e.g., worker) at a site with reference to FIGs. 14 to 25.

FIG. 14 is an example of a sequence diagram of calling processing from a site system in the remote control system according to the embodiment. FIG. 14 illustrates the calling processing when any of the calling device 20A disposed in the site A is pressed by a user (e.g., worker), but the calling processing by another user (e.g., worker) from another site (e.g., site B, site C) can be performed similarly. Further, FIG. 14 is an example case in which the remote communication is performed between the robot 10A-1 and the administrator terminal 50A illustrated in FIG. 2, but the remote communication can be performed between the other robot 10 and the administrator terminal 50 similarly.

The robot 10A-1 disposed at the site A is in a standby state until receiving the control request from the information processing server 70 (step S11). Specifically, the robot 10A-1 moves to the charging station 150 illustrated in FIG. 3 during a period of waiting for receiving the control request from the information processing server 70 to charge the battery via the power supply unit 105. Further, the robot 10A-1 may autonomously travel in the site A, and/or stops at a given position stored in advance during a period of waiting for receiving the control request from the information processing server 70. That is, the robot 10A-1 is in the standby state until receiving the control request from the information processing server 70, so that the robot 10A-1 can start a requested operation when the control request is received.

Then, a user (e.g., worker) in the site A presses the calling device 20A disposed in the site A to call the administrator existing at the remote location, for example, when abnormality occurs during the work. In this case, when the user (e.g., worker) presses the calling device 20A, the reception unit 22 of the calling device 20A receives a selection of the calling device 20A (step S12).

In response to receiving the selection of the calling device 20A in step S12, the position information acquisition unit 23 acquires the current position information of the calling device 20A (step S13), which is the device position information of the calling device (operation device). Further, the acquisition timing of position information by the position information acquisition unit 23 is not limited to the time when the reception unit 22 receives the selection of the button, but can be performed periodically at a given timing.

Then, the transmitting-receiving unit 21 transmits, to the information processing server 70, notification information for calling the administrator existing at the remote location (step S14). The notification information includes the button ID and the position information of the calling device 20A acquired in step S13. Then, the transmitting-receiving unit 71 of the information processing server 70 receives the notification information transmitted from the calling device 20A.

Then, the information processing server 70 performs the search processing of the robot 10 (control target) disposed in the site A based on the notification information received in step S14 (step S15).

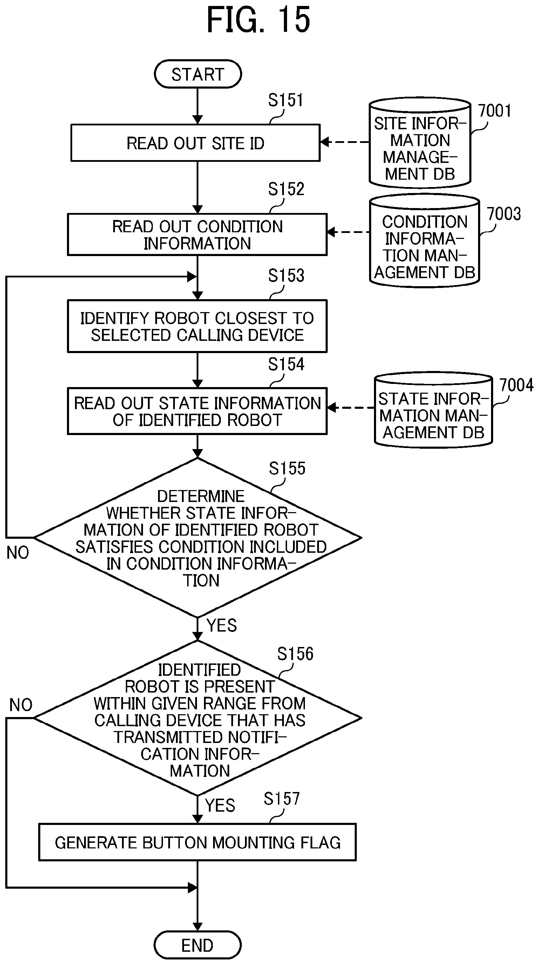

Hereinafter, a description is given of a detailed configuration of the searching process of the robot 10 with reference to FIG. 15. FIG. 15 is an example of flowchart of robot search processing using the information processing server according to the embodiment.

Firstly, the writing-reading unit 79 uses the position information included in the notification information received by the transmitting-receiving unit 71 as a search key to search the site information management DB 7001 (see FIG. 10A) to read out the corresponding site ID (step S151). In this example case, the terminal ID read out by the writing-reading unit 79 is "location A," which is the site ID of the site A.

Further, the writing-reading unit 79 uses the site ID read out in step S151 as a search key to search the condition information management DB 7003 (see FIG. 10C) to read out the corresponding condition information (step S152).

Then, the search unit 73 uses the position information included in the notification information received by the transmitting-receiving unit 71 as a search key to search the position information management DB 7002 (see FIG. 10B) to identify the robot 10 that is present at a position closest to the selected calling device 20A (step S153). Specifically, among the robot 10 stored in the position information management table corresponding to the terminal ID read out in step S151 (in this case, the terminal ID of "location A"), the search unit 73 extracts the terminal ID associated with specific position information that is the closest to the position information included the notification information. Then, the search unit 73 identifies the robot 10, which is identified by the extracted terminal ID, to identify the robot 10 that is present at a position closest to the selected calling device 20A.

In the following description, it is assumed that the search unit 73 identifies the robot 10A-1 identified by the terminal ID of "rA01" as the robot 10 that is present at the position closest to the selected calling device 20A. Although it is assumed that the search unit 73 identifies the robot 10 that is present at the position closest to the calling device 20A, but is not limited thereto.

For example, the search unit 73 can use the captured images transmitted from the robot 10 or information stored for the site in advance to determine the distance from the calling device 20A, and the movement condition, such as obstacles in the site, and a travel route in the site (e.g., straight route, preferably) to identify the robot 10.

Then, the writing-reading unit 79 uses the terminal ID of the robot 10A-1 identified in step S153 to search the state information management DB 7004 (see FIG. 11A) to read out the state information of the identified robot 10A-1 (step S154).

Then, the determination unit 72 determines whether the state information of the robot 10A-1 read out in step S154 satisfies the condition included in the condition information read out in step S152 (step S155).

As illustrated in FIG. 11A, the state information includes the information indicating the capabilities of the robot 10 and the current operation state of the robot 10. For example, the robot 10A-1 has the remaining battery level of 80%, is mounted with the image capture device 12 of rotatable camera, and has the robot hand as the arm.

The state information is periodically transmitted to the information processing server 70 from the robot 10, with which the state information management DB 7004 manages or stores the state information of the robot 10. Further, the state information may be transmitted from the robot 10 to the information processing server 70 in response to receiving an acquisition request from the information processing server 70.

If the determination unit 72 determines that the state information of the robot 10A-1 satisfies the condition included in the condition information read out in step S152 (step S155: YES), the determination unit 72 proceeds the sequence to step S156.

On the other hand, if the determination unit 72 determines that the state information of the robot 10A-1 does not satisfy the condition included in the condition information read out in the step S152 (step S155: NO), the determination unit 72 repeats the sequence from step S153. In this case, in step S153, the search unit 73 searches the position information management DB 7002 (see FIG. 10B) for the robot 10A, other than the robot 10A-1, to identify the robot 10 that is present at the position closest to the selected calling device 20A.

Then, the determination unit 72 determines whether the robot 10A-1 identified in step S153 is present within a given range from the calling device 20A, which has transmitted the notification information that is received by the transmitting-receiving unit 71 (step S156). Specifically, the determination unit 72 determines whether the position information included in the notification information received by the transmitting-receiving unit 71 and the position information of the robot 10A-1 (robot position information of the telepresence robot) identified in step S153 are within the given range.

The given range is a range, in which the position information included in the notification information and the position information of the robot 10A-1 are assumed to be substantially the same. In other words, the given range used as the determination criteria is used for determining whether the calling device 20A is mounted on the robot 10A-1, and can be determined in accordance with the type and precision of data indicating the position information.

If the determination unit 72 determines that the robot 10A-1 exists within the given range from the calling device 20A (step S156: YES), the determination unit 72 proceeds the sequence to step S157.

Then, the generation unit 74 generates a button mounting flag indicating that the calling device 20A, which has transmitted notification information, is mounted on the robot 10A-1 identified in step S153 (step S157).

On the other hand, if the determination unit 72 determines that the robot 10A-1 does not exist in the given range from the calling device 20A (step S156: NO), the determination unit 72 terminates the sequence.

Further, the generation unit 74 may generate information indicating whether or not the calling device 20A is mounted on the robot 10A-1 as the button mounting flag, in which if the determination unit 72 determines that the robot 10A-1 does not exist in the given range from the calling device 20A, the generation unit 74 generates a given button mounting flag indicating that the calling device 20A is not mounted on the robot 10A-1.

With this configuration, based on the position of the calling device 20A selected by the user (e.g., worker) at the site A for calling the administrator, the information processing server 70 can identify the robot 10A-1, which is used for the remote communication with the administrator terminal 50 used by the administrator among the plurality of robots 10 disposed at the site A.

Returning to FIG. 14, the description of the calling processing to the administrator from the user (e.g., worker) at the site A is continued.

The transmitting-receiving unit 71 of the information processing server 70 transmits, to the robot 10A-1 identified by the search unit 73, an operation start request information indicating a control request requesting a starting of an operation of the robot 10A-1 identified as the control target (step S16). The operation start request information includes the button mounting flag generated by the generation unit 74, and the position information of the calling device 20A received in step S14.

Further, if the processing of step S 157 is not performed by the information processing server 70, the operation start request information may not include the button mounting flag, and further the button mounting flag may include the information indicating that the calling device 20A is not mounted on the robot 10A-1. With this configuration, the transmitting-receiving unit 31 of the robot 10A-1 receives the operation start request information transmitted from the information processing server 70.

Then, in response to receiving the operation start request information in step S16, the communication control unit 35 of the robot 10A-1 shifts the robot 10A-1 to a communication standby state (step S17). The communication standby state means, for example, that the control request from another user (e.g., worker) or the administrator is not received, and shifts to a condition of reserving a remote communication with the administrator corresponding to the operation start request information received in step S16.

Then, the robot 10A-1 performs an operation start processing of the robot 10A-1 based on the operation start request information received in step S16 (step S18).

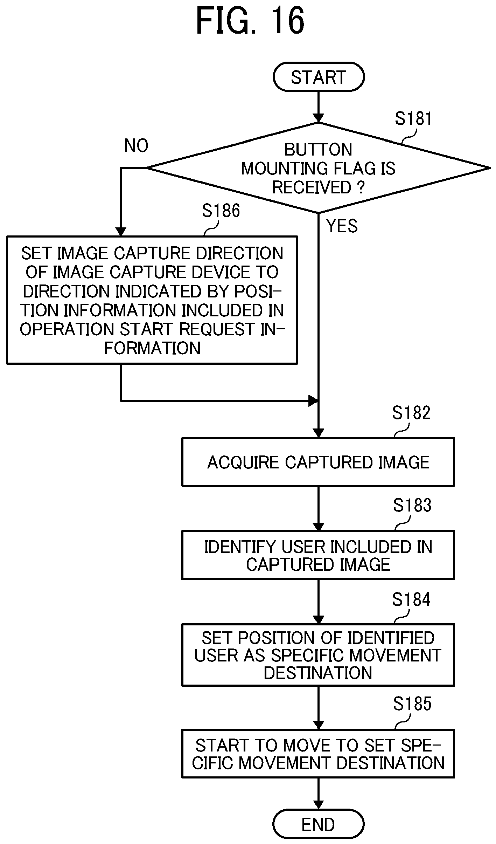

Hereinafter, a description is given of contents of the operation start processing of the robot 10A-1 with reference to FIG. 16. FIG. 16 is an example of flowchart of operation start processing for the robot according to the embodiment.

Firstly, the determination unit 34 determines whether the button mounting flag has been received by the transmitting-receiving unit 31 (step S181).

If the determination unit 34 determines that the button mounting flag is received by the transmitting-receiving unit 31, that is, the determination unit 34 determines that the button mounting flag is included in the operation start request information (step S181: YES), the determination unit 34 proceeds the sequence to step S182. In this case, the calling device 20A selected by the user (e.g., worker) in step S12 is the calling device 20A mounted on the robot 10A-1, such as the calling device 20-4 in FIG. 2.

Then, the image acquisition unit 41 acquires the captured image including one or more objects existing around the robot 10A-1 (step S182). Specifically, the image capture instruction unit 38 transmits an image capture instruction to the image capture device 12 to instruct the image capture device 12 to capture the images of the one or more objects existing around the robot 10A-1. Then, the image acquisition unit 41 acquires the captured images including one or more objects, captured using the image capture device 12 based on the image capture instruction received from the image capture instruction unit 38.

Then, the user identification unit 42 identifies a user (e.g., worker) included in the captured image acquired by the image acquisition unit 41 (step S183). Specifically, the user identification unit 42 performs the face-matching processing (face authentication processing) for the face image of person included in the captured image using the feature value of each user (e.g., worker) stored in the user information management DB 3001 (see FIG. 8A). Then, the user identification unit 42 identifies the user (e.g., worker) having the feature value matched by the face-matching processing as the user (e.g., worker) included in the captured image. Since the face-matching processing by the user identification unit 42 uses known technologies, the detailed description thereof is omitted.

Then, the movement destination setting unit 43 sets a position of the user (e.g., worker) identified by the user identification unit 42 as a specific movement destination of the robot 10A-1 (step S184).

Then, the movement control unit 44 starts to move the robot 10A-1 to the specific movement destination set by the movement destination setting unit 43 using the movement mechanism 15 (step S185). In this example case, the robot 10A-1 moves to the user (e.g., worker) identified by the user identification unit 42. Further, the user (e.g., worker) identified by the user identification unit 42 is the user (e.g., worker) who has pressed the calling device 20A mounted on the robot 10A-1, such as the calling device 20A-4 in FIG. 2.

The robot 10A-1 starts to move while capturing the image of the user (e.g., worker) using the image capture device 12, and recognizes the user (e.g., worker) included in the captured image in the same manner of the above described face-matching processing to identify the position of the user (e.g., worker) who becomes the specific movement destination. Therefore, even if the user (e.g., worker) moves to a place where the user (e.g., worker) wants to perform the remote communicate with the administrator, the robot 10A-1 can move by following the user (e.g., worker) to a current position of the user (e.g., worker) who has pressed the calling device 20A as the movement destination.

Further, the user (e.g., worker) who has pressed the calling device 20A can guide the robot 10A-1 to the place where the user (e.g., worker) wants to perform the remote communicate with the administrator.

On the other hand, in step S181, if the determination unit 34 determines that the button mounting flag is not received, that is, the button mounting flag is not included in the operation start request information (step S181: NO), the determination unit 34 proceeds the sequence to step S186. In this case, the calling device 20A selected by the user (e.g., worker) in step S12 is not mounted on the robot 10A-1, but the calling device 20A is disposed at a position distanced from the robot 10A-1, such as the calling devices 20A-1, 20A-2, and 20A-3 indicated in FIG. 2.

Then, the image capture instruction unit 38 sets an image capture direction of the image capture device 12 (direction of the image capture device 12) to a direction indicated by the position information of the calling device 20A included in the operation start request information received by the transmitting-receiving unit 31 (step S186).

For example, if the image capture device 12 is a rotatable camera, the image capture instruction unit 38 rotates the rotatable camera so that the direction indicated by the position information of the calling device 20A becomes the image capture direction of the rotatable camera.

Further, if the support member 13 illustrated in FIG. 3 is a movable member, the image capture instruction unit 38 rotates or pivots the support member 13 so that the direction indicated by the position information of the calling device 20A becomes the image capture direction of the image capture device 12. Then, the following processing is the same of step S182 and the subsequent steps.

In this case, the robot 10A-1 moves by following the user (e.g., worker) identified by the user identification unit 42. The user (e.g., worker) identified by the user identification unit 42 is a user (e.g., worker) who has pressed the calling device 20A disposed at the position distanced from the robot 10A-1, such as the calling device 20A-4 indicated in FIG. 2. The robot 10A-1 determines the user (e.g., worker) who has pressed the calling device 20A using the user identification unit 42 by capturing a scene corresponding to the position (direction) of the selected calling device 20A. Therefore, the robot 10A-1 can move to the position of the user (e.g., worker) existing near the calling device 20A disposed at the position distanced from the robot 10A-1. Further, the user (e.g., worker) existing at the position distanced from the robot 10A-1 can guide the robot 10A-1 to the position of the user (e.g., worker)

As a result, the robot 10A-1 can start to move by setting the position of the user (e.g., worker) who has pressed the calling device 20A as the movement destination. Further, the robot 10A-1 can identify the position of the user (e.g., worker) who has pressed the calling device 20A set as the movement destination of the robot 10A-1 regardless of the position where the selected calling device 20A is disposed.

Further, the position of the user (e.g., worker) set by the movement destination setting unit 43 is not the exact position of the user (e.g., worker), but the position of the user (e.g., worker) set by the movement destination setting unit 43 is a position that is distanced from the obstacle, such as person including the user (e.g., worker) and object, so that the robot 10A-1 will not collide with the obstacle, such as person including the user (e.g., worker) and object while moving. Further, if the obstacle is included in the captured image acquired in step S182, the robot 10A-1 may transmit information indicating that the operation (movement) cannot be started to the information processing server 70. In this case, the information processing server 70 performs the robot searching process illustrated in FIG. 15 for the robot 10 other than the robot 10A-1.

Returning to FIG. 14 again, the description of the calling processing to the administrator from the user (e.g., worker) at the site A is continued.

The writing-reading unit 79 of the information processing server 70 uses the button ID included in the notification information received in step S14 as a search key to search the administrator information management DB 7005 (see FIG. 11B) to read out the corresponding administrator information (step S19). The administrator information includes the administrator ID, administrator name, and administrator destination information.

Then, the transmitting-receiving unit 71 of the information processing server 70 transmits, to the administrator destination information read out in step S19, communication request information indicating communication request to the robot 10A-1 determined in step S15 (step S20). The communication request information includes the terminal ID of the robot 10A-1 determined in step S15, and the button ID of the calling device 20A received in step S14. Therefore, the transmitting-receiving unit 51 of the administrator terminal 50A used by the administrator, which is indicated by the administrator destination information read out in step S19, receives the communication request information transmitted from the information processing server 70.

Further, the transmitting-receiving unit 71 of the information processing server 70 transmits the administrator information read out in step S19 to the robot 10A-1 (step S21). The administrator information includes at least information of administrator name. Accordingly, the transmitting-receiving unit 31 of the robot 10A-1 receives the administrator information transmitted from the information processing server 70.

Further, the order of processing of steps S16 to S18 and processing of step S19 and step S21 may be changed, or performed in parallel.

Then, in response to acquiring the communication request information transmitted in step S20, the robot 10A and the administrator terminal 50A perform establishment processing of communication session (step S22), in which the administrator of the administrator terminal 50A issues a trigger.

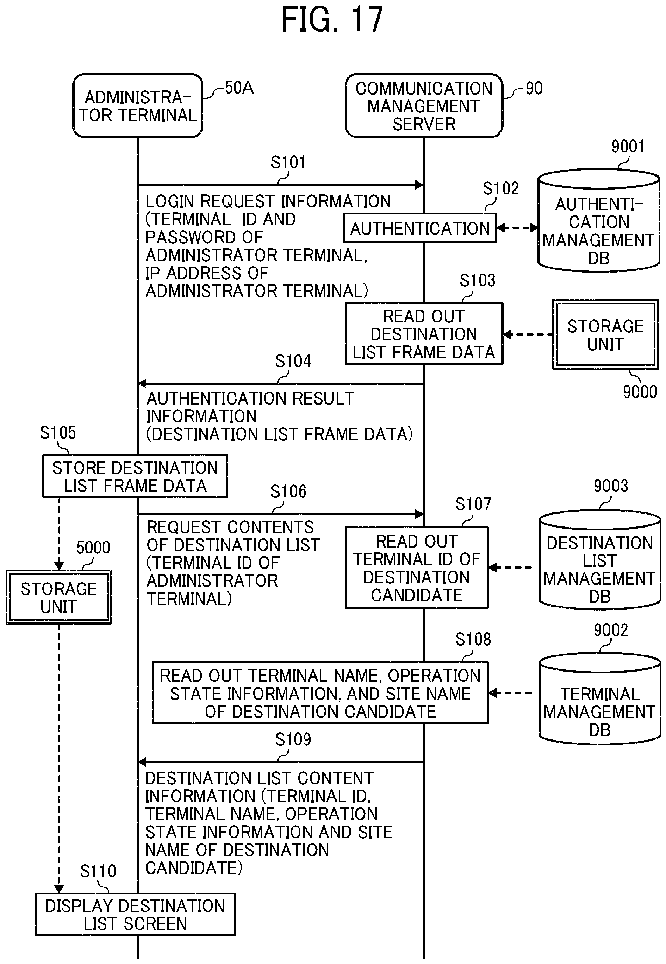

Hereinafter, a description is given of establishment process of communication session between the robot 10A-1 and the administrator terminal 50A with reference to FIGs. 17 to 19.

FIG. 17 is an example of a sequence diagram of preparation processing for data transmission and reception between the robot and the administrator terminal. Hereinafter, the transmission and reception processing of each management information in the preparation stage before starting the data transmission and reception between the administrator terminal 50A (starting terminal) and the robot 10A-1 (destination terminal) is described.

Firstly, the transmitting-receiving unit 51 of the administrator terminal 50A transmits login request information to the communication management server 90 via the communication network 9 (step S101). Specifically, when the administrator of the administrator terminal 50A turns on the power switch of the administrator terminal 50A, the power supply is turned on. Then, when the power supply is turned on, the transmitting-receiving unit 51 of the administrator terminal 50A transmits the login request information to the communication management server 90 from the transmitting-receiving unit 51 via the communication network 9. Then, the transmitting-receiving unit 91 of the communication management server 90 receives the login request information transmitted from the administrator terminal 50A.

The login request information includes a terminal ID identifying the administrator terminal 50A used as the starting terminal, and a password of the administrator terminal 50A. The terminal ID and password are read out from the storage unit 5000 by the writing-reading unit 59, and the data of terminal ID and password is transmitted to the transmitting-receiving unit 51. Further, the terminal ID and password are not limited thereto. For example, the terminal ID and password input by the administrator using the input unit, such as the keyboard 512, may be transmitted. Further, the terminal ID and password read out from a recording medium, such as subscriber identity module (SIM) card or an SD card, connected to the administrator terminal 50A may be transmitted.

Further, when the administrator terminal 50A transmits the login request information to the communication management server 90, the communication management server 90 serving as the receiver, can acquire the IP address of the administrator terminal 50A, which is the transmission source. Further, the transmission of the login request is not necessarily to turning the power switch on, but the login request can be transmitted in response to an input to the input unit, such as the display 511, by the administrator.

Then, the authentication unit 92 of the communication management server 90 uses the terminal ID and the password included in the login request information received by the transmitting-receiving unit 91 as a search key to search the authentication management table (see FIG. 12A) in the storage unit 9000 and determines whether the authentication management DB 9001 stores the same terminal ID and the same password to perform the authentication (step S102).

Hereinafter, a description is given of a case when the authentication unit 92 determines that the administrator terminal 50A is a terminal having a valid use authentication.

Then, if the authentication unit 92 of the communication management server 90 determines that the login request is transmitted from the starting terminal having the valid use authentication based on the same terminal ID and the same password stored in the authentication management DB 9001 in step S102, in step S103, the writing-reading unit 99 reads out the destination list frame data from the storage unit 9000 (step S103).

Then, the transmitting-receiving unit 91 transmits authentication result information including an authentication result acquired by the authentication unit 92 to the administrator terminal 50A that has transmitted the login request via the communication network 9 (step S104). The authentication result information includes the destination list frame data read out in step S103. Then, the transmitting-receiving unit 51 of the administrator terminal 50A receives the authentication result information.

Then, the writing-reading unit 59 of the administrator terminal 50A stores the destination list frame data received in step S104 in the storage unit 5000 (step S105).

Then, if the transmitting-receiving unit 51 receives the authentication result information including the authentication result indicating that the administrator terminal 50A is a terminal having the valid use authentication in step S104, the transmitting-receiving unit 51 transmits destination list content request information for requesting contents of the destination list to the communication management server 90 via the communication network 9 (step S106). The destination list content request information includes the terminal ID of the administrator terminal 50A. Then, the transmitting-receiving unit 91 of the communication management server 90 receives the destination list content request information.

Then, the writing-reading unit 99 of the communication management server 90 uses the terminal ID of "o01" of the administrator terminal 50A received in step S106 as a search key to search the destination list management DB 9003 (FIG. 13A) to read out the terminal ID of all of the corresponding destination candidates (step S107).

Further, the writing-reading unit 99 uses the terminal ID of each terminal read out in step S107 as a search key to search the terminal management DB 9002 (see FIG. 12B) to read out the terminal name of the corresponding destination candidate, operation state information of the corresponding destination candidate, and site name (step S108).

Then, the transmitting-receiving unit 91 transmits the destination list content information to the administrator terminal 50A via the communication network 9 (step 109). The destination list content information includes the terminal ID of the destination candidate, the terminal name of the destination candidate, the operation state information, and the site name read out in steps S107 and S108. Then, the transmitting-receiving unit 51 of the administrator terminal 50A receives the destination list content information.

Then, the display control unit 53 of the administrator terminal 50A instructs the display 511 to display the destination list screen 900 that is created from the destination list frame data stored in the storage unit 5000 in step S105 and the destination list content information received in step S109 (step S110).

FIG. 18 is an example of the destination list screen 900 displayed on the administrator terminal 50A. The destination list screen 900 illustrated in FIG. 18 displays an icon indicating the operation state of the destination candidate (robot 10), the terminal ID of the terminal of the destination candidate, the destination name of the destination candidate, and the site name where the destination candidate is disposed for each destination candidate. Further, the "terminal name" received in step S109 is displayed as "destination name" in the destination list screen 900 illustrated in FIG. 18.

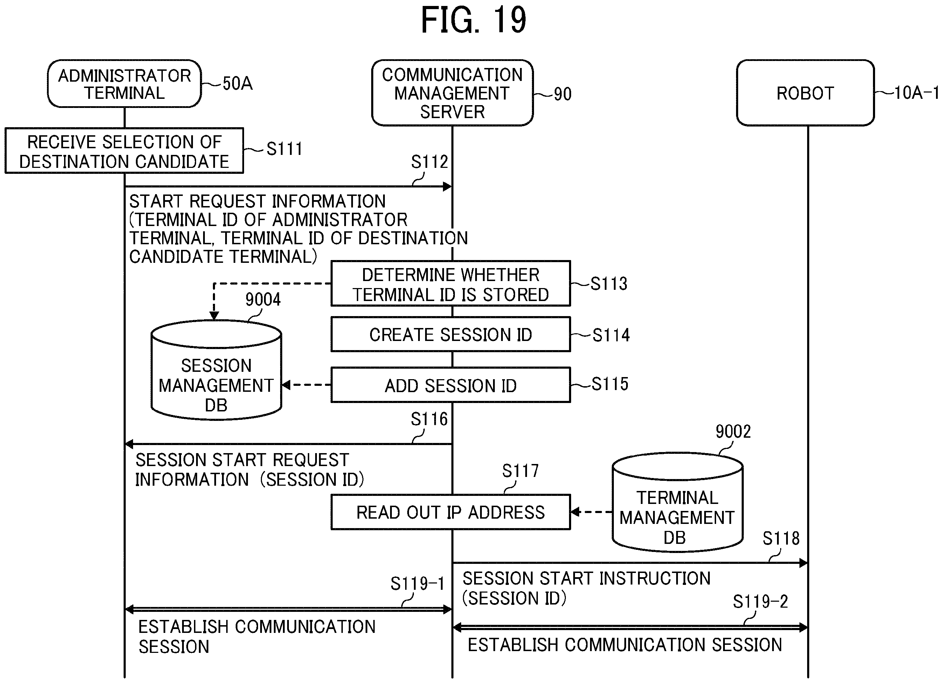

Hereinafter, a description is given of process of selecting the destination candidate and then starting the data transmission and reception from the administrator terminal 50 with reference to FIG. 19. FIG. 19 is an example of a sequence diagram of process of selecting a destination candidate and then starting transmission and reception of image data.

Firstly, the reception unit 52 of the administrator terminal 50A receives a selection of destination candidate (e.g., robot 10A-1) on the destination list screen 900 (see FIG. 18) from a user (step S111).

Then, the transmitting-receiving unit 51 transmits start request information indicating that the transmitting-receiving unit 51 is ready to start the transmission and reception of image data, to the communication management server 90 (step S112). The start request information includes the terminal ID of the administrator terminal 50A, and the terminal ID of the terminal of the destination candidate. Then, the transmitting-receiving unit 91 of the communication management server 90 receives the start request information.

Then, the determination unit 93 of the communication management server 90 determines whether the terminal ID of the administrator terminal 50A received in step S112 is already stored in the session management table (see FIG. 13B). Hereinafter, a description is given of a case that the terminal ID of the destination candidate terminal (i.e., robot 10A-1) is not yet stored in the session management table.

If the terminal ID of the destination candidate is not yet stored in the session management table in step S113, the creation unit 94 of the communication management server 90 creates a new session ID (step S114).

Then, the writing-reading unit 99 additionally stores a new record in the session management table (FIG. 13B), in which the new session ID created in step S114, the terminal ID of the administrator terminal 50A, and the terminal ID of the terminal of the destination candidate terminal received in step S112 are associated with each other and stored as the new record (step S115). In this example case, since the new record is added, as illustrated in FIG. 13B, the session ID of "se3," the terminal ID of "o01" and the terminal ID of "rA01" are associated with each other and stored.

Then, the transmitting-receiving unit 91 transmits session start request information for requesting a session start to the administrator terminal 50A (step S116). The session start request information includes the session ID created in step S114. Then, the transmitting-receiving unit 51 of the administrator terminal 50A receives the session start request information.

Further, the writing-reading unit 99 of the communication management server 90 use the terminal ID of the terminal used as the destination candidate (i.e., robot 10A-1) received in step S112 to search the terminal management DB 9002 (see FIG. 12B) to read out the corresponding IP address (step S117).

Then, the transmitting-receiving unit 91 transmits session start request information for requesting a start of session to the terminal used as the destination candidate (i.e., robot 10A-1) indicated by the IP address read out in step S117 (step S118). The session start request information includes the session ID created in step S114. Then, the transmitting-receiving unit 31 of the destination terminal (i.e., robot 10A-1) receives the session start instruction.

Then, the starting terminal (i.e., administrator terminal 50A) and the destination terminal (i.e., robot 10A-1) establish a communication session with the communication management server 90 (steps S1 19-1, S119-2).

Then, as illustrated in FIG. 14, the transmitting-receiving unit 91 of the communication management server 90 transmits a session establishment notification indicating that a communication session between the robot 10A-1 and the administrator terminal 50A has been established to the information processing server 70 (step S23). Then, the transmitting-receiving unit 71 of the information processing server 70 receives the session establishment notification transmitted from the communication management server 90.

Then, the robot 10A-1 and the administrator terminal 50A use the communication session established by performing the processing described in FIGs. 17 to 19 to perform the remote communication via the communication management server 90 (steps S24-1, S24-2).

With this configuration, the remote control system 1a can initiate or start the remote communication between the robot 10A-1 disposed at the site A, and the administrator terminal 50 disposed at the remote location. Then, the user (e.g., worker) who has pressed the calling device 20A disposed at the site A can use the robot 10A-1 to communicate with the administrator existing at the remote location, in which the pressing of the calling device 20A is used as a trigger of initiating or starting the remote communication.

Further, the robot 10A-1 may perform the processing of steps S17 and S18 and the processing of steps S22 and S24-1 in parallel. After the robot 10A-1 has shifted to the communication standby state in step S17, the robot 10A-1 is in the state that can start the remote communication at any time in response to receiving the session start request information requesting the start of session (step S118 in FIG. 19) from the administrator terminal 50A via the communication management server 90. That is, the robot 10A-1 can initiate or start the remote communication with the administrator terminal 50A, for example, while moving to the movement destination set by the movement destination setting unit 43. In this example case, the user (e.g., worker) who has pressed the calling device 20A can communicate with the administrator while moving to a place where the user (e.g., worker) wants to show to the administrator present at the remote location.

### (Another Operation Start Processing of Robot)

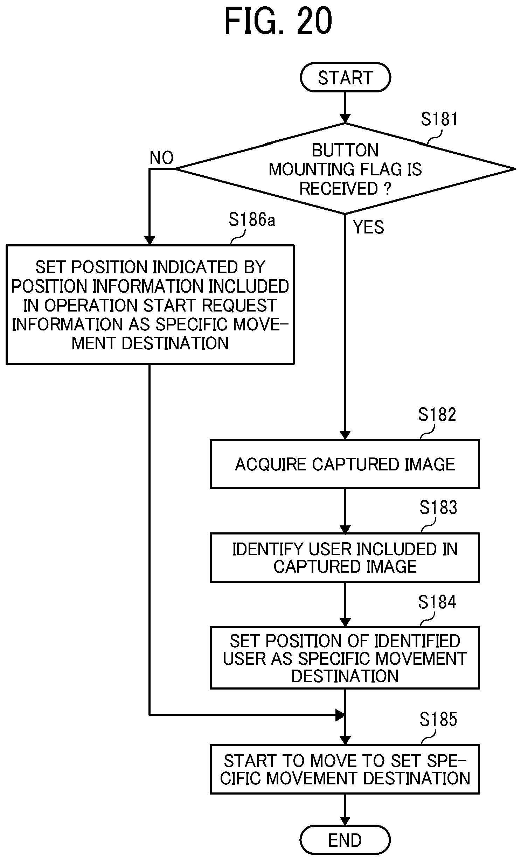

Hereinafter, with reference to FIG. 20, a description is given of another example of operation start processing of the robot 10A-1 illustrated in FIG. 16.

FIG. 20 is another example of flowchart of operation start processing for the robot according to the embodiment. Different from the processing illustrated in FIG. 16, the processing illustrated in FIG. 20 includes different steps after the determination unit 34 determines that the button mounting flag is not received (step S181: NO). That is, as to the processing of FIG. 20, when the calling device 20A pressed by the user (e.g., worker) is not mounted on the robot 10A-1 but is disposed at a position distant from the robot 10A-1, which is different from the processing of FIG. 16. Hereinafter, a description is given of the processing of FIG. 20 different from the processing of FIG. 16.

In step S181, if the determination unit 34 determines that the button mounting flag is not received, that is, the button mounting flag is not included in the operation start request information (step S181: NO), the determination unit 34 proceeds the sequence to step S186a.

Then, the movement destination setting unit 43 of the robot 10A-1 sets the position indicated by the position information included in the operation start request information received by the transmitting-receiving unit 31 as the movement destination of the robot 10A-1 (step S186a).

Then, the movement control unit 44 of the robot 10A-1 starts to move to the specific movement destination set by the movement destination setting unit 43 using the movement mechanism 15 (step S185). In this case, the robot 10A-1 moves to the position of the selected calling device 20A. Therefore, if the selected calling device 20A is disposed at the position distanced from the robot 10A-1, the robot 10A-1 can move to the position of the selected calling device 20A. Further, the user (e.g., worker) present at the position distanced from the robot 10A-1 can guide the robot 10A-1 to the position of the calling device 20A that has been pressed by the user (e.g., worker).

Further, the position of the user (e.g., worker) set by the movement destination setting unit 43 is not the exact position of the calling device 20A, but the position of the user (e.g., worker) set by the movement destination setting unit 43 is a position that is distanced from the obstacle, such as person including the user (e.g., worker) and object, so that the robot 10A-1 will not collide with the obstacle, such as person including the user (e.g., worker) and object while moving.

With this configuration, the robot 10A-1 can set the position of the user (e.g., worker) who has pressed the calling device 20A and the position of the selected calling device 20A as the movement destination of the robot 10A-1 in accordance with the position of the selected calling device 20A.

Further, as to the methods of setting the movement destination in the case where the calling device 20A is not mounted on the robot 10A, described in FIG. 16 or FIG. 20, any one of the methods can be set as the method in advance, or, for example, if the user (e.g., worker) cannot be identified by the processing of FIG. 16, the processing of FIG. 20 may be performed.

### (Notification of Communication State)

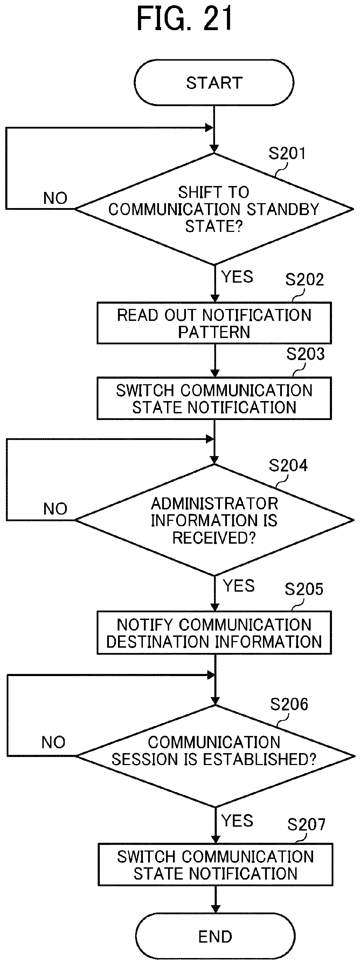

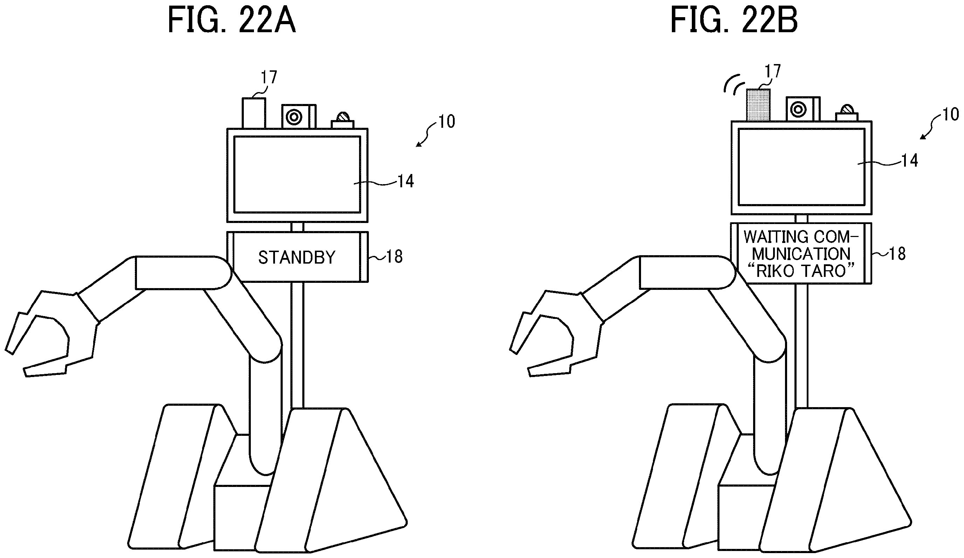

Hereinafter, with reference to FIGs. 21 to 23, a description is given of a process of notifying communication state of the robot 10 to a user at a site. FIG. 21 is an example of flowchart of communication state notification processing for the robot 10 according to the embodiment. The processing of FIG. 21 is started from a standby state of the robot 10, illustrated in FIG. 22A. As illustrated in FIG. 22A, the robot 10 in the standby state does not turn on the lamp 17, and the notification panel 18 displays "standby." The notification by the lamp 17 and the notification panel 18 corresponds to the "notification pattern C" stored in the notification pattern management DB 3009 (see FIG. 8B).

When the robot 10A-1 shifts to the communication standby state in step S17 (step S201: YES), the robot 10A-1 proceeds the processing to step S202.

On the other hand, the robot 10A-1 repeats the processing of step S201 until the robot 10A-1 is shifted to the communication standby state in step S17 (step S201: NO).

Then, the writing-reading unit 39 searches the notification pattern management DB 3009 (see FIG. 8B) to read out a notification pattern corresponding to the communication state of "waiting communication (in this case, the notification pattern B) (step S202).

Then, the communication state notification control unit 49 switches the communication state notification in accordance with the notification pattern read out in step S202 (step S203). Specifically, as illustrated in FIG. 22B, the communication state notification control unit 49 emits light using the lamp 17 based on the notification pattern (notification pattern B) different from the notification pattern during the standby. (notification pattern C). Further, the communication state notification control unit 49 instructs the notification panel 18 to display "waiting communication." The communication state notification control unit 49 controls the lamp 17 to emit light patterns for each of the notification patterns, for example, by emitting the light using different colors or blinking or flashing patterns, and controls the notification panel 18 to display the information to present the communication state to the user visually.

Then, if the administrator information is received in step S21 (step S204: YES), the robot 10A-1 proceeds the process to step S205.

On the other hand, the robot 10A-1 repeats the process of step S204 until the administrator information is received in step S21 (S204: NO).

Then, as illustrated in FIG. 22B, the communication state notification control unit 49 instructs the notification panel 18 to display the administrator name (e.g., Riko Taro) included in the administrator information received in step S21 (step S205).

Then, if the communication session with the administrator terminal 50A is established in step S23 (step S206: YES), the robot 10A-1 proceeds the processing to step S207.

On the other hand, the robot 10A-1 repeats the process in step S206 until the communication session with the administrator terminal 50A is established (step S206: NO).

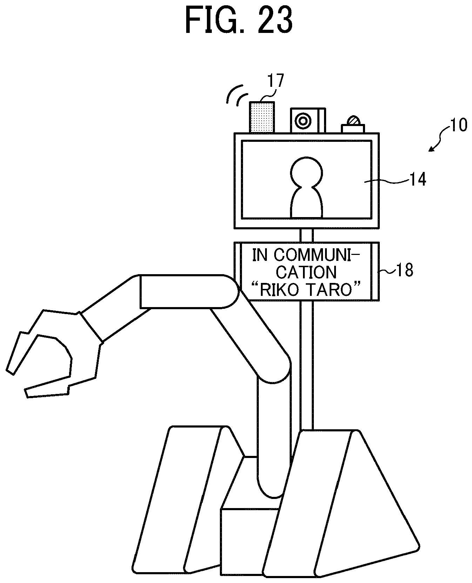

Then, the communication state notification control unit 49 switches the communication state according to the notification pattern (in this case, the notification pattern A) corresponding to the communication state of "in communication" by searching the notification pattern management DB 3009 (see FIG. 8B) (step S207). Specifically, as illustrated in FIG. 23, the communication state notification control unit 49 switches the emission of the lamp 17 based on the notification pattern corresponding to the communication state of "in communication." Further, the communication state notification control unit 49 switches the display of the notification panel 18 from "waiting communication" to "in communication."

Thus, the robot 10A-1 changes the color or blinking (timing) of the lamp 17 and/or information displayed on the notification panel 18 based on the communication state, with which the user at the site can recognize the communication state of the robot 10A-1 and/or the information of the communication partner. The user at the site can understand whether the robot 10A-1 is in the standby or waiting communication state based on the notified information, and therefore, the user can reduce the discomfort or inconvenience caused by the sudden start of the remote communication unintentional for the user.

Further, the notification may be performed using at least any one of the lamp 17 and the notification panel 18 used as the communication information control unit. Further, the information displayed on the notification panel 18 may be divided into a plurality of notification panels, or a part or all of notification panels may be displayed on the display 14. Further, the communication state notification unit is not limited to the lamp 17 and the notification panel 18, but may be configured as a speaker that notifies the communication state of the robot 10 using sound.

### (Cancellation of Communication Request)

Hereinafter, a description is given of processing of canceling a communication request used for initiating a remote communication between the robot 10 and the administrator terminal 50.

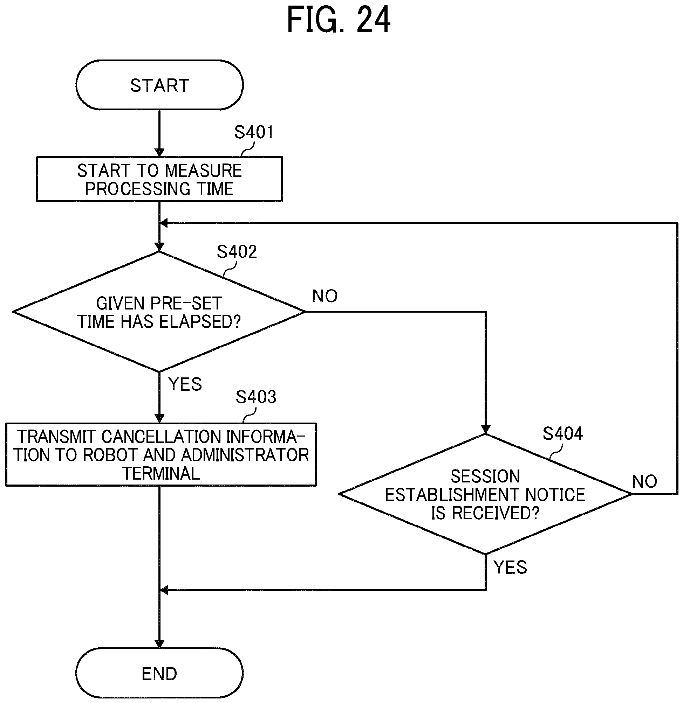

Hereinafter, with reference to FIG. 24, a description is given of the processing of canceling the communication request when the remote communication is not started over a given time period in the state of waiting for communication. FIG. 24 is a flowchart illustrating an example of cancellation processing of a communication request at the information processing server according to the embodiment.

When the communication request information is transmitted to the administrator terminal 50A in step S20, the measurement unit 75 of the information processing server 70 starts to measure the processing time using the timer 716 (step S401). In this case, the timing of starting the measurement of the processing time may be at a timing of transmitting the operation start request information in step S16, or at a timing of starting the session establishment process in step S22.

Then, if a given pre-set time has elapsed since the start of measurement in step S401 (step S402: YES), the measurement unit 75 proceeds the processing to step S403. Then, the transmitting-receiving unit 71 transmits to the robot 10A-1 and the administrator terminal 50A, cancellation information indicating that the communication request is canceled (step S403).

On the other hand, if the given time period has not elapsed since the start of measurement in step S401 (step S402: NO), the measurement unit 75 proceeds the processing to step S404.

When the session establishment notice is received in step S23 (step S404: YES), since the communication session is established within the given time period, the information processing server 70 terminates the processing, and then the remote communication between the robot 10A-1 and the administrator terminal 50A is started.

On the other hand, if the session establishment notice is not received in step S23 (step S404: NO), the information processing server 70 repeats the processing from step S402.

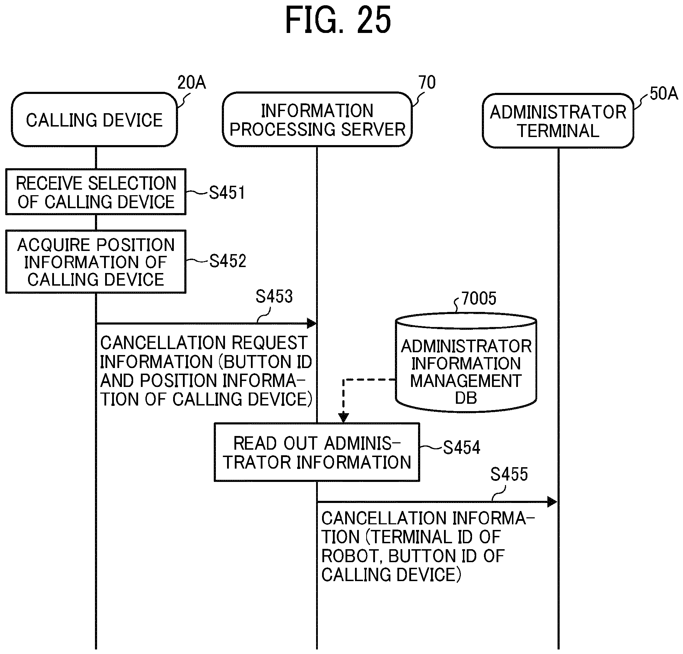

Hereinafter, with reference to FIG. 25, a description is given of a processing of canceling a communication request based on a request from a user at a site. FIG. 25 is an example of a sequence diagram of canceling a communication request in the remote control system according to the embodiment. In the processing of FIG. 25, it is assumed that the robot 10A-1 is in the communication standby state, which is shifted in step S17.

At first, when the user at the site A presses the calling device 20A disposed in the site A, the reception unit 22 of the calling device 20A receives a selection of the calling device, such as the button (step S451). In step S451, the calling device 20A may be the button selected in step S12, or may be a dedicated button for canceling a communication request.

In response to receiving the selection of the calling device in step S451, the position information acquisition unit 23 acquires or obtains the current position information of the calling device 20A (step S452). Further, the timing of acquisition of position information by the position information acquisition unit 23 is not limited to the timing of receiving the selection of the calling device by the reception unit 22, but can be at a given pre-set timing periodically.

Then, the transmitting-receiving unit 21 transmits the cancel request information indicating a request of the remote communication cancel to the information processing server 70 (step S453). The cancellation request information includes the button ID of the calling device 20A, and the position information of the calling device 20A acquired in step S452. Then, the transmitting-receiving unit 71 of the information processing server 70 receives the cancellation request information transmitted from the calling device 20A.

Then, the writing-reading unit 79 of the information processing server 70 uses the button ID included in the cancellation request information received in step S453 as a search key to search the administrator information management DB 7005 (see FIG. 11B) to read out the corresponding administrator information (step S454). The administrator information includes the administrator ID, administrator name, and administrator destination information.

Then, the transmitting-receiving unit 71 of the information processing server 70 transmits to the administrator destination corresponding to the administrator destination information read out in step S454, cancel information indicating that the communication request to the robot 10A-1 determined in step S15 is cancelled (step S455). The cancellation information includes the terminal ID of the robot 10A-1 determined in step S15, and the button ID of the calling device 20A received in step S454.

Then, the transmitting-receiving unit 51 of the administrator terminal 50A used by the administrator, which is identified by the administrator destination information read out in step S454, receives the cancel information transmitted from the information processing server 70, and stops or cancels the process of starting the remote communication with the robot 10A-1.

As described above, as to the remote control system 1a, the processing of starting the remote communication that was started once can be cancelled if the remote communication between the robot 10A-1 and the administrator terminal 50A is not started when the given time period has elapsed, or can be cancelled in response to the request by the user at the site. This allows the user at the site to cancel the processing of starting the remote communication easily when the administrator does not respond to the calling from the user, or when the calling is not required after calling the administrator, with which the user convenient can be improved.

### (Termination of Remote Communication)

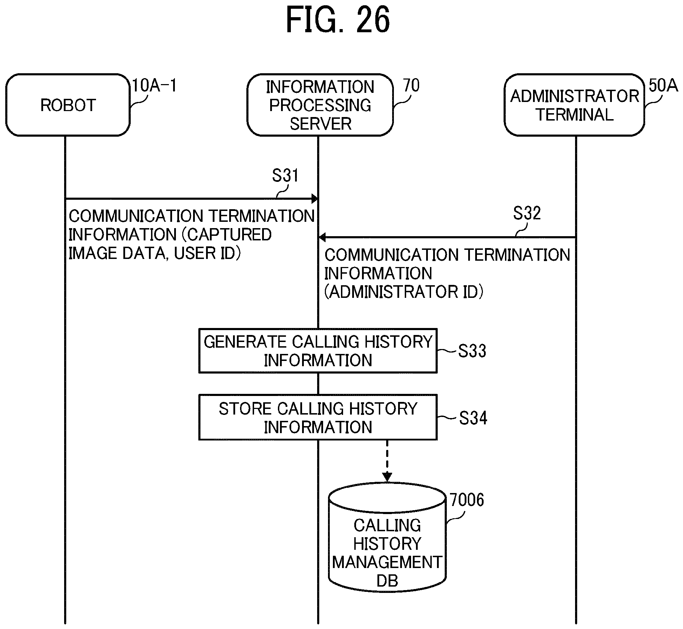

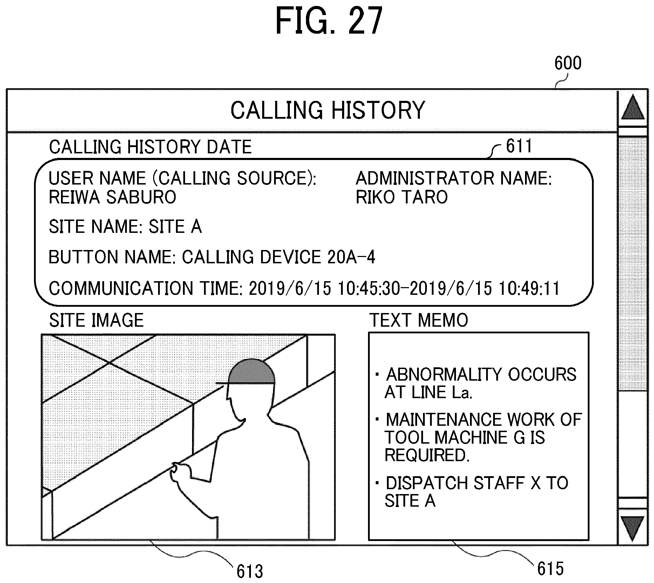

Hereinafter, a description is given of a processing when the remote communication between the administrator terminal 50 and the robot 10 is terminated with reference to FIGs. 26 and 27. FIG. 26 is an example of a sequence diagram of processing when a remote communication between the robot and the administrator terminal is terminated. The processing illustrated in FIG. 26 is a processing when the administrator terminal 50A and the robot 10A-1 performs the remote communication using the communication session established by the processing illustrated in FIGs. 17 to 19.

Firstly, the transmitting-receiving unit 31 of the robot 10A-1 transmits, to the information processing server 70, communication termination information indicating that the remote communication with the administrator terminal 50A has been terminated (step S31). The communication termination information transmitted from the robot 10A-1 includes the captured image data acquired by the image acquisition unit 41, and the user ID identifying the user (e.g., worker) that has selected the calling device 20 in step S12.

Further, the transmitting-receiving unit 51 of the administrator terminal 50A transmits, to the information processing server 70, communication termination information indicating that the remote communication with the robot 10A-1 has been terminated (step S32). The communication termination information transmitted from the administrator terminal 50A includes the administrator ID identifying the administrator that has performed the remote communication using the administrator terminal 50A. Then, the transmitting-receiving unit 71 of the information processing server 70 receives the communication termination information transmitted from the administrator terminal 50A. Further, the order of processing of steps S31 and S32 may be changed, or the processing of steps S31 and S32 may be performed in parallel.

Then, the generation unit 74 of the information processing server 70 uses the communication termination information received in steps S31 and step S32 to generate calling history information indicating a calling history from the user at the site A to the administrator existing at the remote location (step S33).

Then, the writing-reading unit 79 stores the calling history information generated in step S33 in the calling history management DB 7006 (see FIG. 11C) (step S34). Specifically, the writing-reading unit 79 stores the calling history information generated by the generation unit 74 to the storage destination linked in the calling history management table.

Hereinafter, a description is given of an example of the calling history information stored in the calling history management DB 7006 with reference to FIG. 27.

FIG. 27 is an example of the calling history information. FIG. 27 is an example of the calling history display screen 600 displaying the calling history information, stored in the calling history management DB 7006, on the display 14 of the robot 10 and/or the display 511 of the administrator terminal 50. As illustrated in FIG. 27, the calling history display screen 600 includes, for example, a calling history data display section 611 displaying calling history data, a site image 613 where the image capture device 12 of the robot 10A-1 captures images in the site A, and a text display section 615 displaying information on the remote communication that is performed between the robot 10A-1 and the administrator terminal 50A.

The calling history data display section 611 displays information, such as user name (e.g., worker name), site name, button name (name of the selected calling device 20A), administrator name, and communication time that are identified by the calling history data stored in the calling history management DB 7006.

Further, the text display section 615 displays the contents of dialogue during the remote communication, and memorandum input by the input unit provided for the administrator terminal 50 or the robot 10A-1, using a text format.

Further, the calling history display screen 600 may include the image of the administrator captured by the CMOS sensor 505a of the administrator terminal 50.

With this configuration, the remote control system 1a can store the calling history information at the information processing server 70, with which the remote control system 1a can store information of who has called whom in the performed remote communication, and what contents were used in the performed remote communication. Therefore, the user (e.g., worker) at the site or the administrator can use the contents included in the calling history information as improvement material for events that have occurred at a later time at the site or events that may occur in the future. Further, the calling history information is stored in the information processing server 70 and managed in the above described configuration, but is not limited thereto. For example, the calling history information can be stored in the robot 10 or the administrator terminal 50.

### (Processing at Terminating Remote Communication)

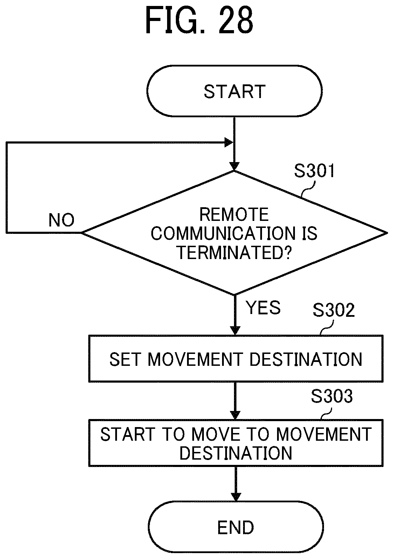

Hereinafter, with reference to FIG. 28, a description is given of a movement of the robot 10 after terminating the remote communication. FIG. 28 is an example of flowchart of processing of a robot after terminating the remote communication according to the embodiment.

Firstly, when the remote communication with the administrator terminal 50A described above is completed or terminated (step S301: YES), the robot 10A-1 proceeds the processing to step S302.

On the other hand, if the remote communication with the administrator terminal 50A is being performed (step S301: NO), the robot 10A-1 repeats the processing in step S301 and continues to communicate with the administrator terminal 50A.

Then, the movement destination setting unit 43 sets a pre-set reference position as a movement destination of the robot 10A-1 (step S302). The pre-set reference position is, for example, the position of the charging station 150 that supplies power illustrated in FIG. 3, or the position of the robot 10A-1 before the start of the movement in step S185.

Then, the movement control unit 44 uses the movement mechanism 15 to start to move the robot 10A-1 to the movement destination set by the movement destination setting unit 43 (step S303).

With this configuration, when the remote communication is completed or terminated, the robot 10 starts to move to the given pre-set reference position and automatically moves away from the user, with which the robot 10 can reduce the discomfort of the user that the robot 10 is being near the user even after the remote communication is completed or terminated.

As to the above described embodiment, the remote control system 1a can perform the remote communication by calling the administrator existing at the remote location from a user (e.g., worker) at the site using the pressing of the calling device 20 at the site as a trigger.

Further, the remote control system 1a can move the robot 10A-1 disposed in the site to the specific movement destination, set based on the position information of the selected calling device 20A, with which the user (e.g., worker) at the site can communicate with the administrator at the position where the user (e.g., worker) wants to perform the remote communication.

### (Modification Example)

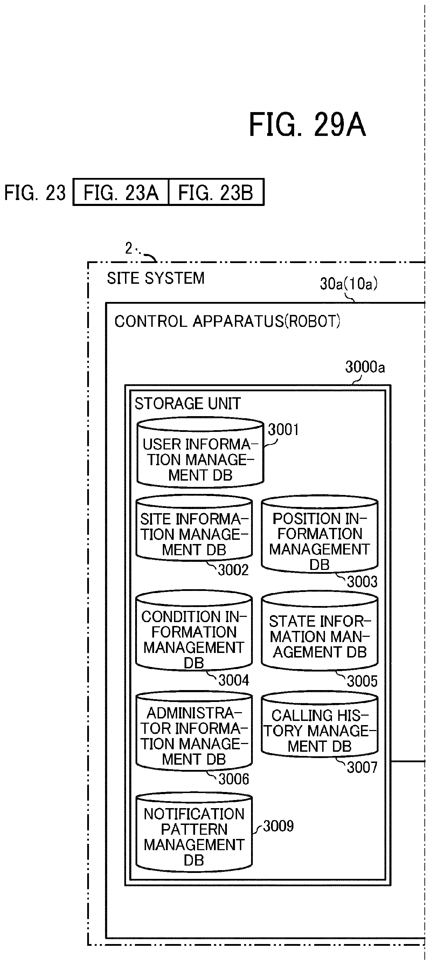

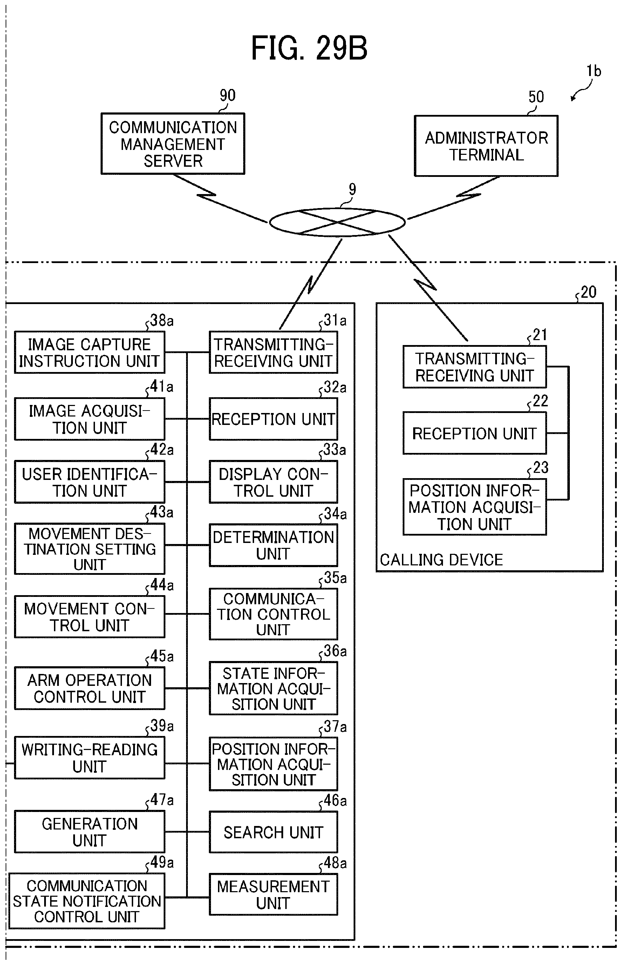

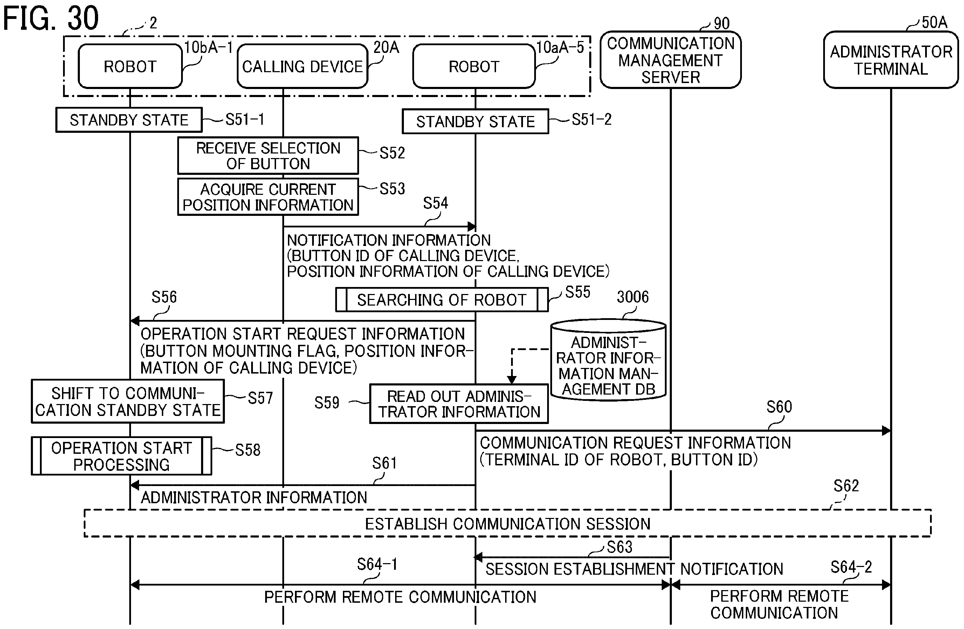

Hereinafter, a description is given of a remote control system according to a modification example of the embodiment with reference to FIGs. 29 and 30. The same configuration and the same function as those of the above-described embodiment are denoted by the same reference numerals, and the description thereof is omitted.

A remote control system 1b according to the modification example of the embodiment is a system that includes the robot 10 having the function of the information processing server 70 of the above described embodiment, among a plurality of robots disposed in a site. Hereinafter, the robot 10 having the function of the information processing server 70 is referred to as a robot having the server function.

In the following description, the robot 10 having the server function is referred to as the robot 10a (control apparatus 30a), and the other robot 10 not having the server function is referred to as the robot 10b (control apparatus 30b). The robot 10b (control apparatus 30b) has the same configuration as the robot 10 (control apparatus 30) described in the above embodiment. The control apparatus 30a is an example of information processing apparatus.

### (Functional Configuration)

FIGs. 29A and 29B (FIG. 29) are an example of a functional block diagram of the remote control system 1b according to the modification example of the embodiment. Since the functions of device or terminal other than the robot 10a (control apparatus 30a) having the server function is the same as those of the functions illustrated in FIG. 7, the description thereof will be omitted.

The control apparatus 30a used for controlling the processing or operation of the robot 10a includes, for example, a transmitting-receiving unit 31a, a reception unit 32a, a display control unit 33a, a determination unit 34a, a communication control unit 35a, a state information acquisition unit 36a, a position information acquisition unit 37a, an image capture instruction unit 38a, an image acquisition unit 41a, a user identification unit 42a, a movement destination setting unit 43a, a movement control unit 44a, an arm operation control unit 45a, a communication state notification control unit 49a, a writing-reading unit 39, and a storage unit 3000a. These units employ the same configurations of the transmitting-receiving unit 31, the reception unit 32, the display control unit 33, the determination unit 34, the communication control unit 35, the state information acquisition unit 36, the position information acquisition unit 37, the image capture instruction unit 38, the image acquisition unit 41, the user identification unit 42, the movement destination setting unit 43, the movement control unit 44, the arm operation control unit 45, the communication state notification control unit 49, and the writing-reading unit 39 of the robot 10 (robot 10b).

Further, in addition to the above configuration, the control apparatus 30a includes a search unit 46a, a generation unit 47a, and a measurement unit 48a. The search unit 46a, the generation unit 47a, and measurement unit 48a employ the same configurations of the search unit 73, the generation unit 74, and the measurement unit 75 of the information processing server 70.

The transmitting-receiving unit 3 1a is an example of notification information receiving unit. Further, the transmitting unit 31a is an example of output unit. Further, the transmitting-receiving unit 31a is an example of communication request transmission unit. Further, the search unit 46a is an example of determination unit.

Further, the storage unit 3000a includes, for example, a site information management DB 3002, a position information management DB 3003, a condition information management DB 3004, a state information management DB 3005, an administrator information management DB 3006, and a calling history management DB 3007, in addition to the user information management DB 3001 of the storage unit 3000 of the robot 10 (robot 10b). These units employ the same configurations of the site information management DB 7001, the position information management DB 7002, the condition information management DB 7003, the state information management DB 7004, the administrator information management DB 7005, and the calling history management DB 7006 of the information processing server 70. The storage unit 3000a is an example of memory or storage means.

### (Operation and Processing)

Hereinafter, a description is given of operation and processing of the remote control system 1b according to the modification example with reference to FIG. 30. FIG. 30 is an example of sequence diagram of calling processing from the site system in the remote control system 1b according to the modification example of the embodiment. In FIG. 30, the processing performed by the control apparatus 30aA-5 provided for the robot 10Aa-5 will be described as the processing performed by the robot 10Aa-5. Further, the processing performed by the control apparatus 30bA-1 provided for the robot 10bA-1 will be described as the processing performed by the robot 10bA-1.

The robot 10bA-1 and the robot 10aA-5 disposed at the site A are in a standby state until receiving the control request from the information processing server 70 (steps S51-1, S51-2). This processing is similar to the processing of step S11 in FIG. 14.

Then, a user (e.g., worker) in the site A presses the calling device 20A disposed in the site A to call the administrator existing at the remote location, for example, when abnormality occurs during the work. In this case, when the user (e.g., worker) presses the calling device 20A, the reception unit 22 of the calling device 20A receives a selection of the calling device 20A, such as the button (step S52).

In response to receiving the selection of the calling device 20A in step S52, the position information acquisition unit 23 acquires the current position information of the calling device 20A (step S53).

Then, the transmitting-receiving unit 21 transmits, to the robot 10aA-5 having the server function, notification information for calling the administrator existing at the remote location (step S54). The notification information includes the button ID and the position information of the calling device 20A acquired in step S53. Then, the transmitting-receiving unit 31a of the robot 10aA-5 receives the notification information transmitted from the calling device 20A.

Then, the robot 10aA-5 performs the search processing of the robot 10 (control target) disposed in the site A based on the notification information received in step S54 (step S55). Since the search processing of the robot 10 by the robot 10aA-5 is similar to that of the information processing server 70 illustrated in FIG. 15, the description of the search processing of the robot 10 by the robot 10aA-5 is omitted. In this example case, it is assumed that the robot 10aA-5 identify the robot 10bA-1 as the control target.

Then, the transmitting-receiving unit 31a of the robot 10aA-5 transmits, to the robot 10bA-1 identified by the search unit 46a as the control target, an operation start request information indicating a control request requesting a starting of an operation of the robot 10bA-1 identified as the control target (step S56). The operation start request information includes the button mounting flag generated by the generation unit 47, and the position information of the calling device 20A received in step S54. Further, when the processing of step S 157 is not performed by the robot 10aA-5, the operation start request information does not include the button mounting flag. Then, the transmitting-receiving unit 31 of the robot 10bA-1 receives the operation start request information transmitted from the robot 10aA-5.

Then, in response to receiving the operation start request information in step S56, the communication control unit 35 of the robot 10bA-1 shifts the robot 10bA-1 to a communication standby state (step S57). The communication standby state means, for example, that the control request from another user (e.g., worker) or the administrator is not received, and shifts to a condition or reserving a remote communication with the administrator corresponding to the operation start request information received in step S56.

Then, the robot 10bA-1 performs the operation start processing of the robot 10bA-1 based on the operation start request information received in step S56 (step S58). Since the operation start processing of the robot 10bA-1 is the same as the operation start processing in FIG. 16 or FIG. 20, the description thereof will be omitted. Then, the robot 10bA-1 can start to move to the movement destination set by the movement destination setting unit 43a starts by performing the processing of FIG. 16 or FIG. 20.

Further, the writing-reading unit 39a of the robot 10aA-5 uses the button ID included in the notification information received in step S54 as a search key to search the administrator information management DB 3006 to read out the corresponding administrator information (step S59). The administrator information includes the administrator ID, administrator name, and administrator destination information.

Then, the transmitting-receiving unit 31a of the robot 10aA-5 transmits, to the administrator destination information read out in step S59, communication request information indicating communication request to the robot 10bA-1 identified in step S55 (step S60). The communication request information includes the terminal ID of the robot 10bA-1 identified in step S55, and the button ID of the calling device 20A received in step S54. Therefore, the transmitting-receiving unit 51 of the administrator terminal 50A used by the administrator, which is indicated by the administrator destination information read out in step S59, receives the communication request information transmitted from the robot 10aA-5.

Further, the transmitting-receiving unit 31a of the robot 10aA-5 transmits the administrator information read out in step S59 to the robot 10bA-1 (step S61). The administrator information includes at least information of administrator name. Then, the transmitting-receiving unit 31 of the robot 10bA-1 receives the administrator information transmitted from the robot 10aA-5. Further, the order of processing of steps S56 to S58 and processing of steps S59 to S61 may be changed, or performed in parallel.

Then, in response to acquiring the communication request information transmitted in step S60, the robot 10bA-1 and the administrator terminal 50A perform establishment processing of communication session described in FIGs. 17 to 19 (step S62), in which the administrator of the administrator terminal 50A issues a trigger.

Then, the transmitting-receiving unit 91 of the communication management server 90 transmits, to the robot 10aA-5, a session establishment notice indicating that a communication session between the robot 10bA-1 and the administrator terminal 50A has been established (step S63). Then, the transmitting-receiving unit 31a of the robot 10aA-5 receives the session establishment notification transmitted from the communication management server 90.

Then, the robot 10bA-1 and the administrator terminal 50A use the communication session established by the processing in step S62 to perform the remote communication via the communication management server 90 (steps S64-1, S64-2).

With this configuration, as in the case of the remote control system 1a described in the above embodiment, the remote control system 1b can initiate or start the remote communication between the robot 10bA-1 disposed at the site A, and the administrator terminal 50 disposed at the remote location.

Thus, as to the remote control system 1b according to the modification example of the embodiment including the robot 10a having the server function in the site system 2, the remote control system 1b can perform the remote communication by calling the administrator existing at the remote location from a user (e.g., worker) at the site using the pressing of the calling device 20 at the site as a trigger. The other processing of the information processing server 70 described in the above-described embodiment can be performed by the robot 10aA-5. That is, as to the remote control system 1b according to the modification example of the embodiment, the processing illustrated in FIGs. 21 to 28 can be performed.

As to the above described embodiment of this disclosure, the information processing apparatus (e.g., information processing server 70 or control apparatus 30a) controls the operation of telepresence robot (e.g., robot 10A) disposed in a given site (e.g., site A).

When a user (e.g., worker) present in the site operates the calling device 20 (an example of operation device), the information processing apparatus receives, from the calling device 20, the notification information including the position information of the calling device 20, the information processing apparatus outputs, to a specific telepresence robot (e.g., robot 10A-1), which is determined or identified based on the received position information of the calling device 20 and position information of telepresence robot, the operation start request requesting a movement to a specific movement destination, and transmits a communication request for the specific telepresence robot, to the administrator terminal (e.g., administrator terminal 50A) that performs the remote communication with the specific telepresence robot.

Then, the information processing apparatus instructs the specific telepresence robot to start to move to the specific movement destination, and initiates or starts the remote communication between the administrator terminal 50 and the specific telepresence robot. With this configuration, the information processing apparatus can initiate or start the remote communication between the specific telepresence robot and the administrator terminal 50, which can be determined or identified based on the position of the calling device 20A.

Further, the information processing apparatus can move the telepresence robot to a place where the user (e.g., worker) wants to perform the remote communication by starting the movement of the specific telepresence robot to the specific movement destination. Therefore, the information processing apparatus can improve the convenience of remote communication using the telepresence robot.

Further, as to the above described embodiment of this disclosure, the information processing apparatus (e.g., information processing server 70 or control apparatus 30a) determines or identifies a specific telepresence robot (e.g., robot 10A-1) that is present at a position closest to the calling device 20A (an example of operation device) based on the received position information of the calling device 20A and position information of a plurality of telepresence robots (e.g., robot 10A), and then the information processing apparatus outputs the operation start request requesting the movement to the specific movement destination to the specific telepresence robot when the remaining battery level of the specific telepresence robot is a given value or more. With this configuration, the information processing apparatus can request the appropriate telepresence robot to start the operation of the telepresence robot based on the position of the selected calling device 20A and the state of the telepresence robot among the telepresence robots disposed in the site.

Further, as to the above described embodiment of this disclosure, the telepresence robot is a telepresence robot (e.g., robot 10, 10b) that starts the operation in response to receiving the request from the information processing apparatus (e.g., information processing server 70 or control apparatus 30a).

The telepresence robot acquires the operation start request requesting the movement to the specific movement destination from the information processing apparatus, starts to move to the specific movement destination indicated by the acquired operation start request, and starts the remote communication with the administrator terminal 50 in response to receiving the request from the administrator terminal 50 when the movement of telepresence robot is started.

With this configuration, the telepresence robot can initiate or start the movement and the remote communication with the administrator terminal 50 based on the operation start request that is transmitted using the calling from the user (e.g., worker) at the site as the trigger. Therefore, the telepresence robot can improve the convenience of the remote communication with the administrator existing at the remote location.

Further, as to the above described embodiment of this disclosure, in response to acquiring the operation start request requesting the movement to the specific movement destination, the telepresence robot (e.g., robot 10, 10b) captures an image of the user (e.g., worker) who has performed the operation to the calling device 20 (an example of operation device), and if the calling device 20 is mounted on the telepresence robot (e.g., robot 10, 10b), the telepresence robot (e.g., robot 10, 10b) sets the position of the user (e.g., worker) captured in the image as the specific movement destination. Then, the telepresence robot starts to move to the set specific movement destination. With this configuration, even if the user (e.g., worker) has moved to a place where the user (e.g., worker) wants to perform the remote communication with the administrator, the telepresence robot can move by following the position of the user (e.g., worker) who has pressed the calling device 20 as the movement destination.

Further, the user (e.g., worker) who has pressed the calling device 20 can guide the telepresence robot to the place where the user (e.g., worker) wants to perform the remote communication with the administrator.

Further, as to the above described embodiment of this disclosure, in response to acquiring the operation start request requesting the movement to the specific movement destination, if the calling device 20 (an example of operation device) is not mounted on the telepresence robot (e.g., robot 10, 10b), the telepresence robot (e.g., robot 10, 10b) sets the position of the calling device 20 as the specific movement destination. Then, the telepresence robot starts to move to the set specific movement destination. With this configuration, the telepresence robot can move to the position of the calling device 20 when the calling device 20 is disposed at the position distanced from the telepresence robot. Further, the user (e.g., worker) who is at the position distanced from the telepresence robot can guide the telepresence robot to the position of the calling device 20 pressed by the user (e.g., worker).

Further, as to the above described embodiment of this disclosure, the operation start request requesting the movement to the specific movement destination acquired by the telepresence robot (e.g., robot 10, 10b) includes the button mounting flag (an example of mounting state information) indicating whether the calling device 20 (one example of operation device) is mounted or not on the telepresence robot. Then, if the acquired button mounting flag indicates that the calling device 20 is mounted on the telepresence robot, the telepresence robot sets the position of the user (e.g., worker) captured in the image as the specific movement destination.

By contrast, if the acquired button mounting flag indicates that the calling device 20 is not mounted on the telepresence robot, the telepresence robot sets the position of the calling device 20 as the specific movement destination.

With this configuration, the telepresence robot can set the movement destination based on the button mounting flag output from the information processing apparatus (e.g., information processing server 70 or control apparatus 30a), so that the telepresence robot can start to move to the different movement destinations depending on the position of the selected calling device 20.

Further, as to the above described embodiment of this disclosure, the remote control system (remote control system 1a, 1b) includes the information processing apparatus (e.g., information processing server 70 or control apparatus 30a), the site control system 3 including the telepresence robot (e.g., robot 10, 10b) that can start the operation in response to receiving the request from the information processing apparatus, and the administrator terminal 50. The administrator terminal 50 receives a communication request from the information processing apparatus, and in response to the received communication request, starts a remote communication with a specific telepresence robot (e.g., a robot 10A-1).

With this configuration, the remote control systems 1a and 1b can initiate or start the remote communication between the telepresence robot and the administrator terminal 50 disposed at the remote location using the selection of the calling device 20A disposed in the site as the trigger.

Further, as to the above described embodiment of this disclosure, the remote control system (remote control system 1a, 1b) includes the storage unit (e.g., storage unit 7000) that sores the communication history information indicating a communication history of the specific telepresence robot (e.g., robot 10A-1) and the specific administrator terminal 50 (e.g., administrator terminal 50A) including information of the user (e.g., worker) who has performed the operation to the calling device 20 (an example of operation device) and the administrator using the specific administrator terminal 50.

With this configuration, the remote control systems 1a and 1b can store information indicating who has called whom in the performed remote communication, and what contents were communicated in the performed remote communication. Therefore, the user (e.g., worker) at the site or the administrator can use the contents included in the calling history information as improvement information for events that have occurred at a later time at the site or events that may occur in the future.

As to the above described embodiment, the convenience in remote communication using a telepresence robot can be improved.

As to the information processing apparatus, telepresence robot, site control system, remote control system, information processing method, and program described above, numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

Further, various tables used in the above described embodiment can be generated by the learning effect of machine learning, and the tables do not need to be used by classifying data of each item associated with other using the machine learning. The machine learning is a technology for acquiring learning ability like a person on a computer, and a technology which autonomously generates an algorithm required for determination, such as data identification, based on learning data acquired in advance, and predicting new data by applying the algorithm. The learning methods for machine learning may be either supervised learning, unsupervised learning, semi- supervised learning, reinforcement learning, deep learning, or any combination of these learning methods of for mechanical learning.

Further, each of the functions of the above-described embodiments can be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), system on a chip (SOC), graphics processing unit (GPU), and conventional circuit components arranged to perform the recited functions.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium or means. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device. The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. An information processing apparatus (70, 30a) for controlling operation of a telepresence robot (10) at a site, the information processing apparatus (70, 30a) comprising:
a notification information receiving unit (71, 31a) configured to receive notification information including device position information of an operation device (20) at the site, the operation device (20) being configured to receive an operation performed by a user;
an output unit (71, 31a) configured to output an operation start request for moving to a specific movement destination, to a specific telepresence robot (10) that is identified based on the device position information included in the received notification information and robot position information of the telepresence robot (10) at the site; and
a communication request transmitting unit (71, 31a) configured to transmit a communication request to an administrator terminal (50) configured to perform a remote communication with the specific telepresence robot (10), to instruct the specific telepresence robot (10) to move to the specific movement destination, and to start a remote communication between the administrator terminal (50) and the specific telepresence robot (10).

2. The information processing apparatus (70, 30a) of claim 1, further comprising:
a determination unit (73, 46a) configured to determine the specific telepresence robot (10) that is present at a position closest to the operation device (20) based on the device position information included in the received notification information and the robot position information of a plurality of telepresence robots at the site,
wherein the output unit (71, 31a) outputs the operation start request to the specific telepresence robot (10) when the determined specific telepresence robot (10) satisfies a given condition of the state of the telepresence robot (10).

3. The information processing apparatus (70, 30a) of claim 2,
wherein the given condition is a condition on remaining battery level of the telepresence robot, and
wherein the output unit (71, 31a) outputs the operation start request to the specific telepresence robot (10) when the remaining battery level of the specific telepresence robot (10) is equal to or greater than a given value.

4. The information processing apparatus (70, 30a) of any one of claims 1 to 3,
wherein the specific movement destination is a position of a user who has performed the operation to the operation device (20), and
wherein the specific telepresence robot (10) is instructed to move to the position of the user.

5. The information processing apparatus (70, 30a) of any one of claims 1 to 3,
wherein the specific movement destination is a position indicated by the device position information of the received operation device (20), and
wherein the specific telepresence robot (10) is instructed to move to the position of the operation device (20).

6. The information processing apparatus (70, 30a) of any one of claims 1 to 5,
wherein the communication request transmitting unit (71, 31a) transmits, to the administrator terminal (50), cancel information to cancel the communication request if the remote communication is not started when a given period of time elapses from a start of measuring time.

7. The information processing apparatus (70, 30a) of any one of claims 1 to 5,
wherein the notification information receiving unit (71, 31a) receives the cancellation request of the remote communication from the operation device (20), and
wherein the communication request transmitting unit (71, 31a) transmits cancellation information canceling the communication request to the administrator terminal (50).

8. A telepresence robot (10) capable of starting to operate in response to receiving a request from the information processing apparatus (70, 30a) of any one of claims 1 to 7, comprising:
an acquisition unit (31) configured to acquire an operation start request from the information processing apparatus (70, 30a);
a movement control unit (44) configured to start to move the telepresence robot (10) to a specific destination indicated by the acquired operation start request; and
a communication control unit (35) configured to start a remote communication with an administrator terminal (50) in response to receiving a request from the administrator terminal (50) when the movement of the telepresence robot (10) is started.

9. The telepresence robot (10) of claim 8, further comprising:
an image capture device (12) configured to capture an image of a user who has performed the operation to the operation device (20) when the acquisition unit (31) acquires the operation start request from the information processing apparatus (70, 30a); and
a setting unit (43) configured to set a position of the user included in the captured image as the specific movement destination,
wherein the movement control unit (44) starts to move the specific telepresence robot (10) to the specific movement destination, and
wherein when the operation device (20) is mounted on the telepresence robot (10), the setting unit (43) sets the position of the user included in the captured image as the specific movement destination.

10. The telepresence robot (10) of claim 8, further comprising:
a setting unit (43) configured to set the position of operation device (20) as the specific movement destination when the acquisition unit (31) acquires the operation start request from the information processing apparatus (70, 30a),
wherein the movement control unit (44) starts to move the specific telepresence robot (10) to the set specific movement destination, and
wherein when the operation device (20) is disposed at a position in the site different from the telepresence robot (10), the setting unit (43) sets the position of the operation device (20) as the specific movement destination.

11. The telepresence robot (10) of claim 9 or claim 10,
wherein the operation starting request includes mounting state information indicating whether the operation device (20) is mounted on the telepresence robot (10) or is disposed at the position different from the telepresence robot (10),
wherein when the mounting state information indicates that the operation device (20) is mounted on the telepresence robot (10), the setting unit (43) sets the position of the user included in the captured image as the specific movement destination, and
wherein when the mounting state information indicates that the operation device (20) is disposed at the position in the site different from the telepresence robot (10), the setting unit (43) sets the position of the operation device (20) as the specific movement destination.

12. The telepresence robot (10) of any one of claims 8 to 11,
wherein the movement control unit (44) starts to move the telepresence robot (10) to a given reference position when the remote communication is terminated.

13. The telepresence robot (10) of any one of claims 8 to 12, further comprising a communication state notification unit (17, 18) configured to notify the communication state of the remote communication.

14. A method of controlling an operation of a telepresence robot (10) at a site, comprising:
receiving notification information including device position information of an operation device (20) at the site, the operation device (20) being configured to receive an operation performed by a user;
outputting an operation start request for moving to a specific movement destination, to a specific telepresence robot (10) that is identified based on the device position information included in the received notification information and robot position information of the telepresence robot (10) at the site;
transmitting a communication request to an administrator terminal (50) configured to perform a remote communication with the specific telepresence robot (10);
instructing the specific telepresence robot (10) to move to the specific movement destination; and
starting a remote communication between the administrator terminal (50) and the specific telepresence robot (10).

15. A carrier means storing one or more instructions that, when performed by one or more processors, cause the one or more processors to execute the method of claim 14.
